# EUROPÄISCHE PATENTSCHRIFT

(11) **EP 2 197 640 B1**
(45) Veröffentlichungstag und Bekanntmachung des Hinweises auf die Patenterteilung: **26.08.2015**
(21) Anmeldenummer: 08803914.4
(22) Anmeldetag: 09.09.2008
(51) Int. Cl.: B28B 3/00, B28B 15/00, B28B 11/18, B28B 7/38, C04B 28/02, B22C 7/06

(54) **VERFAHREN FÜR DIE HERSTELLUNG VON ZUBEHÖRSTEINEN SOWIE EINE EINRICHTUNG FÜR DIE HERSTELLUNG DIESER ZUBEHÖRSTEINE**
METHOD FOR PRODUCING ACCESSORY TILES AND DEVICE FOR PRODUCING SAID ACCESSORY TILES
PROCÉDÉ ET DISPOSITIF PERMETTANT LA FABRICATION DE TUILES AUXILIARES

(30) Priorität: 11.09.2007 DE 102007043163
(43) Veröffentlichungstag der Anmeldung: 23.06.2010
(73) Patentinhaber: Monier Roofing GmbH, 61440 Oberursel (DE)
(72) Erfinder: BÖHM, Benno, 46325 Borken (DE); CHOWANIETZ, Peter, 48249 Dülmen (DE)
(74) Vertreter: Patentanwälte Olbricht Buchhold Keulertz
(86) Internationale Anmeldenummer: PCT/EP2008/061946
(87) Internationale Veröffentlichungsnummer: WO 2009/034085

(56) Entgegenhaltungen:
- EP-A- 1 106 281
- DE-A1- 3 203 645
- GB-A- 2 425 508
- JP-A- 8 267 437

## Beschreibung

Die Erfindung betrifft ein Verfahren für die Herstellung von Zubehörsteinen nach dem Oberbegriff des Anspruchs 1 sowie eine Einrichtung für die Herstellung dieser Zubehörsteine nach dem Oberbegriff des Anspruchs 14.

Bei einem geneigten Dach wird der größte Teil der Dachfläche mit Flächendachsteinen eingedeckt. Für die Eindeckung spezieller Bereiche des Daches und zur Erfüllung von bestimmten technischen Funktionen werden die Flächendachsteine jedoch in Kombination mit Zubehörsteinen verlegt. Zubehörsteine sind beispielsweise die im First- und Gratbereich zu verlegenden First- und Gratanfangsteine sowie die Walmkappen. Zu den Zubehörsteinen mit technischer Funktion gehören dagegen Schneestopsteine, Lüftersteine und Standsteine. Da Zubehörsteine gegenüber den Flächendachsteinen eine deutlich komplexere Geometrie aufweisen, gestaltet sich die Herstellung von Flächendachsteinen und Zubehörsteinen sehr unterschiedlich.

Die Herstellung von Flächendachsteinen erfolgt im Strangpressverfahren, wie es in der deutschen Offenlegungsschrift DE 35 22 846 A1 beschrieben ist. Hierbei wird Frischbeton auf ein endloses Band von Unterformen aufgebracht und mittels einer profilierten Walze in die Unterformen gepresst, so dass ein kontinuierliches Band aus verdichtetem Frischbeton entsteht, dessen Querschnittsprofil demjenigen des späteren Flächendachsteins entspricht. Anschließend wird das kontinuierliche Band zerschnitten, so dass jede Unterform einen einzelnen Flächendachsteinrohling trägt.
Das Strangpressverfahren gewährleistet zwar eine effiziente Herstellung der Flächendachsteine, doch lassen sich nur einfache Geometrien herstellen, da es die Formgebung mittels einer Walze und einer Unterform nicht erlaubt, den Flächendachsteinrohling mit quer zur Extrusionsrichtung verlaufenden Konturen zu versehen. Derartige Konturen sind jedoch bei vielen Zubehörsteinen erforderlich. Ein alternatives Verfahren, das eine größere Formfreiheit erlaubt, ist das in der EP 1 106 281 B1 offenbarte Kernschießverfahren, gemäß dem Oberbegriff des Anspruchs 1, sowie die in dieser Druckschrift offenbarte Einrichtung, gemäß dem Oberbegriff des Anspruchs 14, bei dem ein mit Verzögerung aushärtender Formstoff mittels Druckluft in einen Kernkasten eingeschossen und anschließend aus ihm entnommen wird. Zum Einschießen des Formstoffs wird der Kernkasten im Wesentlichen in einer Vertikalen bezüglich der Längsrichtung des zu formenden Körpers positioniert und zur Entnahme des Formkörpers im Wesentlichen in eine Horizontale geschwenkt. Bei dem in EP 1 106 281 B1 beschriebenen Formstoff kann es sich um Frischbeton handeln, wodurch die Erfindung bei der Herstellung von Dachsteinen einsetzbar ist.
Aus EP 1 106 281 B1 sind keine Siebdüsen bekannt, denn die bekannten Düsen dienen nicht dazu, Absaugmarken zu verhindern, weil diese nicht in einem Formträger angeordnet sind, auf dem der zu formende Dachstein liegt.
Weiterhin sind ein Verfahren und eine Vorrichtung zum Einbringen und Verdichten von Beton und dergleichen plastischen Massen in Formhohlräume bekannt (DE 32 03 645 A1). Zubehörsteine werden mit diesem Verfahren bzw dieser Vorrichtung nicht hergestellt. Auch sind keine Siebdüsen an einem Formträger bekannt, die dazu dienen, Absaugmarken lediglich an der Unterseite eines Zubehörsteins anzubringen, um eine hohe Oberflächengüte zu erhalten.
Des Weiteren sind ein Verfahren und eine Vorrichtung zum Herstellen von Dachsteinen bekannt, wobei mehrere Komponenten miteinander gemischt werden (GB 2 425 508 A). Die Herstellung von Zubehörsteinen ist jedoch nicht angesprochen. Außerdem ist keine Kernschießvorrichtung aus dieser Druckschrift bekannt.

In der Praxis werden Zubehörsteine manuell gefertigt, was zeitaufwändig und kostenintensiv ist. First- und Gratanfangsteine werden mit einem zweiteiligen Formkasten hergestellt, wobei die untere Hälfte des Formkastens die Unterseite und die obere Hälfte des Formkastens die Oberseite des First- oder Gratanfangsteins formt. Nach dem manuellen Einbringen des Frischbetons in die untere Hälfte wird die obere Hälfte des Formkastens aufgelegt und angepresst. Die Verdichtung des Frischbetons erfolgt anschließend, indem der Formkasten auf einen Rütteltisch gesetzt wird. Die Verdichtung des Frischbetons fällt dabei je nach Verweilzeit auf dem Rütteltisch unterschiedlich aus, so dass die First- und Gratanfangsteine hinsichtlich ihrer Frost-Tau-Wechselbeständigkeit variieren.

Die Verfahren zur Herstellung von Schneestopsteinen, Lüftersteinen und Standsteinen sind sehr ähnlich. Bei der Herstellung von Schneestopstein wird zuerst aus Frischbeton eine als Schneebarriere dienende Rippe geformt, die anschließend im fußseitigen Bereich auf die Oberseite des Flächendachsteins aufgeklebt wird. Die Produktion von Standsteinen erfolgt, indem die den Steigtritt tragende Konsole vorgefertigt und auf den Dachstein aufgeklebt wird. Zur Herstellung eines Lüftersteins wird mittig aus dem Flächendachstein eine Lüftungsöffnung ausgeschnitten, die anschließend mit einer separat gefertigten Lüfterhaube gegen das Eindringen von Regen abgedeckt wird. Dazu wird die Lüfterhaube auf die Oberseite des Flächendachsteins aufgeklebt. Die Klebeverbindung stellt bei derartigen Zubehörsteinen eine mechanische Schwachstelle dar, die zur Rissbildung neigt. Durch das Eindringen von Feuchtigkeit kann es zur Frostsprengung und zur weiteren Schwächung der Klebeverbindung kommen. Beim Einwirken einer äußeren Kraft, beispielsweise beim Auftreten eines Dachdeckers während einer Dachbegehung, besteht daher die Gefahr, dass sich das angeklebte Fügeteil (Schneebarriere, Konsole, Lüfterhaube) vom Flächendachstein ablöst. Da die Flächendachsteine und die Fügeteile separat hergestellt werden, erfolgen auch deren Farbbeschichtungen unabhängig voneinander. Die Flächendachsteine und die Fügeteile variieren daher farblich, so dass auch die fertigen Zubehörteile farblich kein einheitliches Erscheinungsbild bieten. Selbst bei einer zusätzlichen Farbbeschichtung des fertigen Zubehörsteins lässt sich kein einwandfreies ästhetisches Erscheinungsbild mehr herstellen.

Aufgabe der vorliegenden Erfindung ist daher es, ein Verfahren und eine Anlage zur Verfügung zu stellen, die eine wirtschaftlich effizientere Herstellung von Zubehörsteinen und gleichzeitig eine Steigerung der Qualität der hergestellten Zubehörbausteine ermöglichen.

Die der Erfindung zugrunde liegende Aufgabe wird gemäß den Merkmalen der Patentansprüche 1 und 14 gelöst.

Die Erfindung betrifft somit ein Verfahren für die Herstellung von Zubehörsteinen mittels einer Kernschießvorrichtung. Dabei wird ein Kernkasten bereitgestellt, der in seinem Innern einen Formträger aufweist. Über eine Einschussöffnung des Kernkastens wird Frischbeton in den Kernkasten eingebracht. Die Entlüftung des Kernkastens erfolgt über zumindest eine an dem Formträger angeordnete Siebdüse. Der in dem Kernkasten entstandene Zubehörstein wird aus dem Kernkasten entnommen und einer Schneidvorrichtung zugeführt, wo überstehende Grate de Zubehörsteins abgetrennt werden.

Erfindungsgemäß wird der Frischbeton durch einen Druckluftstoß mit einer hohen kinetischen Energie in den Formkasten einer Kernschießvorrichtung für die Herstellung von Zubehörsteinen eingeschossen, wodurch eine deutlich höhere Verdichtung erzielt wird als bei dem herkömmlichen Verdichten des Frischbetons auf einem Rütteltisch. Aufgrund der höheren Verdichtung des Frischbetons weisen die Zubehörsteine eine geringere Porosität auf und damit eine höhere Frost-Tau-Wechselbeständigkeit (nach DIN EN 490, geprüft nach DIN EN 491).

Da der den Frischbeton aufnehmende Hohlraum des Formkastens dem fertigen Zubehörstein entspricht, entstehen monolithische Zubehörsteine. Die separate Herstellung und das zeitaufwändige Verkleben von Flächendachsteinen und Fügeteilen entfallen, und dementsprechend weist der Zubehörstein auch keine schwächende Klebeverbindung mehr auf.

Nach dem Einschießvorgang kann der Formkasten aus der Kernschießvorrichtung herausgenommen und zerlegt werden. Der Zubehörstein wird dann aus dem Formkasten entnommen und umgehend einer Beschichtungsstation zugeführt, so dass der Farbauftrag auf den noch feuchten Frischbeton des noch nicht ausgehärteten Zubehörsteins erfolgt, was als Nassbeschichtung bezeichnet wird. Auf diese Weise werden Farbvariationen, wie sie früher, bedingt durch die separate Farbbeschichtung der Flächendachsteine und der Fügeteile, unvermeidlich waren, vermieden. Die Nassbeschichtung ermöglicht zudem eine optimale Vernetzung der Farbe, üblicherweise einer Polymerdispersionsfarbe, mit der Oberfläche des Zubehörsteins, so dass eine verbesserte Anhaftung und Haltbarkeit der Farbbeschichtung erzielt wird. Ein einziger Farbauftrag ist für ein ästhetisches Erscheinungsbild des Zubehörsteins ausreichend.

Verschiedene Ausführungsformen der Erfindung werden anhand der Figuren erläutert und nachfolgend näher beschrieben. Es zeigen:
- Fig. 1: eine Anlage zur Herstellung von Zubehörsteinen in schematischer Darstellung;
- Fig. 2: eine Seitenansicht einer Kernschießvorrichtung mit einem Kernkasten, die sich innerhalb der in Fig. 1 gezeigten Anlage befindet;
- Fig. 3: eine Frontansicht der in Fig. 2 gezeigten Kernschießvorrichtung mit Kernkasten mit Blick in Richtung B;
- Fig. 4: eine Nachverdichtungseinheit;
- Fig. 5: eine Explosionsdarstellung einer Schießeinheit;
- Fig. 6: zwei in einer Aufnahmevorrichtung gemäß Fig. 1 angeordnete Schneidwerkzeuge;
- Fig. 7: eine Farbbeschichtungsanlage der Anlage gemäß Fig. 1;
- Fig. 8: eine Draufsicht auf eine in der Farbbeschichtungsanlage gemäß Fig. 7 angeordnete Sprühkammer;
- Fig. 9: einen Schnitt C-C durch den in Fig. 3 gezeigten Kernkasten mit einem Teil der Kernschießvorrichtung gemäß Fig. 3;
- Fig. 10: eine Explosionsdarstellung des in Fig. 9 gezeigten Kernkastens;
- Fig. 11: eine andere Ansicht des Kernkastens gemäß Fig. 10;
- Fig. 12: eine Explosionsdarstellung einer Variante des in Fig. 10 gezeigten Kernkastens;
- Fig. 13: eine andere Ansicht des Kernkastens gemäß Fig. 12;
- Fig. 14: eine Explosionsdarstellung einer weiteren Variante des in Fig. 10 gezeigten Kernkastens.

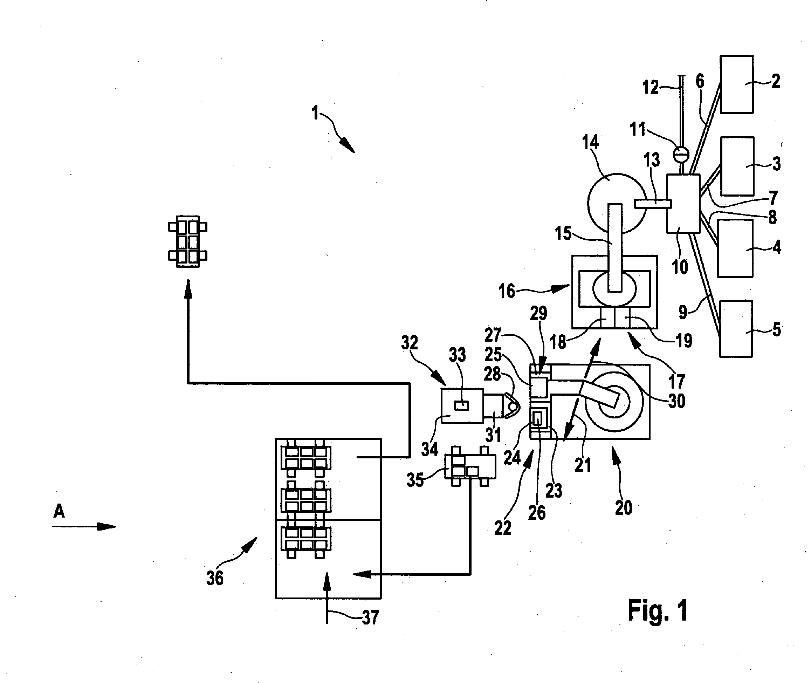

In Fig. 1 ist eine Anlage 1 zur Herstellung von Zubehörsteinen schematisch dargestellt. Das Verfahren zur Herstellung von Zubehörsteinen wird nachfolgend anhand dieser Fig. 1 beschrieben. Die Anlage 1 weist vier Siloeinheiten 2 bis 5 auf, in denen die Komponenten für die Herstellung einer Frischbetonmischung bevorratet sind. Die Siloeinheit 2 enthält Pigmente und Additive, die Siloeinheit 3 Sand verschiedener Sieblinien, die Siloeinheit 4 Zement und die Siloeinheit 5 Zuschlagsstoffe. Die Siloeinheiten 2 bis 5 sind über Förderschnecken 6 bis 9 mit einer Wiege- und Dosiervorrichtung 10 verbunden, so dass die Komponenten aus den Siloeinheiten 2 bis 5 der Wiege- und Dosiervorrichtung 10 zugeführt werden können. Die Wiege- und Dosiervorrichtung 10 ist zudem mit einer mit einem Absperrventil 11 versehenen Wasserleitung 12 verbunden, über die das zum Anrichten der Frischbetonmischung erforderliche Wasser bezogen werden kann. Zur Wiege- und Dosiervorrichtung 10 gehört eine Rechnereinheit, in der die Rezeptur der Frischbetonmischung hinterlegt ist und mit der die Förderschnecken 6 bis 9 und das Absperrventil 11 angesteuert werden können. Auf diese Weise kann die Wiege- und Dosiervorrichtung 10 die einzelnen Komponenten gemäß der Rezeptur zusammenstellen und über eine Zuleitung 13 einem Mischer 14 zuführen. Hierbei werden dem Mischer 14 zuerst die feststofflichen Komponenten zugeführt, und mit dem Beginn des Mischvorganges erfolgt die Zugabe der flüssigen Komponenten, also des Wassers und der Additive. Im Mischer 14 werden die Komponenten ca. 3 Minuten lang durchmischt.

Die Mischung weist folgende Zusammensetzung auf:
- Sand (Typ 0/3, Hersteller: CWS) 45 bis 75 Gew.%, besonders bevorzugt 54,13 Gew.%
- Sand (Typ 0.5/2, Hersteller: CWS): 0 bis 24 Gew.%, besonders bevorzugt 11,4 Gew.%
- Quarzsand (Typ L 55, Hersteller: Quarzwerke): 0 bis 30 Gew.%, besonders bevorzugt 5,7 Gew.%
- Zement (Typ CEM II 52,5, Hersteller: Holcim): 18 bis 25 Gew.%, besonders bevorzugt 20,89 Gew.%
- Additiv (Typ FK 61, Hersteller: MC Bauchemie): 0,2 bis 1,4 Gew.%, besonders bevorzugt 0,47 Gew.%
- Additiv (Typ BWA 22, Hersteller: MC Bauchemie): 0,2 bis 0,8 Gew.%, besonders bevorzugt 0,38 Gew.%
- Farbe (Typ granit, Hersteller: Lanxess): 0,3 bis 1,0 Gew.%, besonders bevorzugt 0,5 Gew.%,

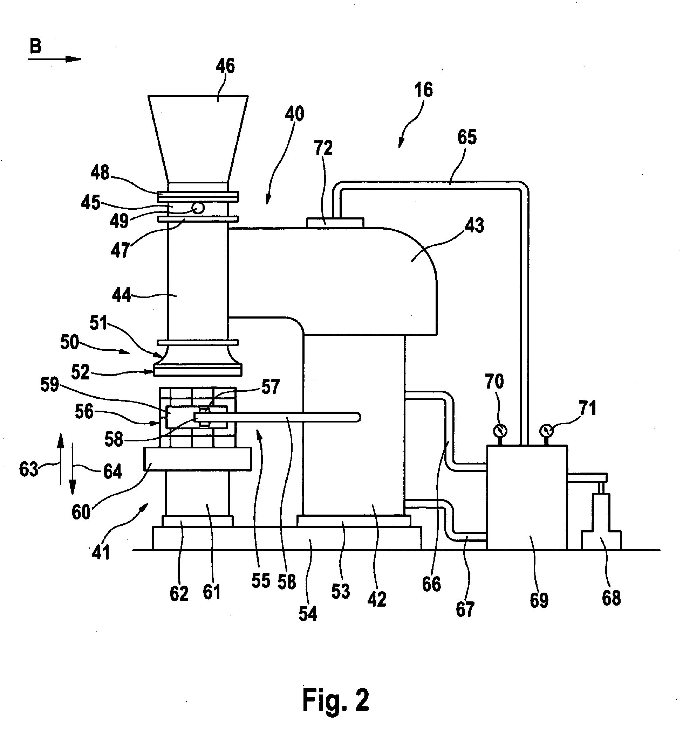

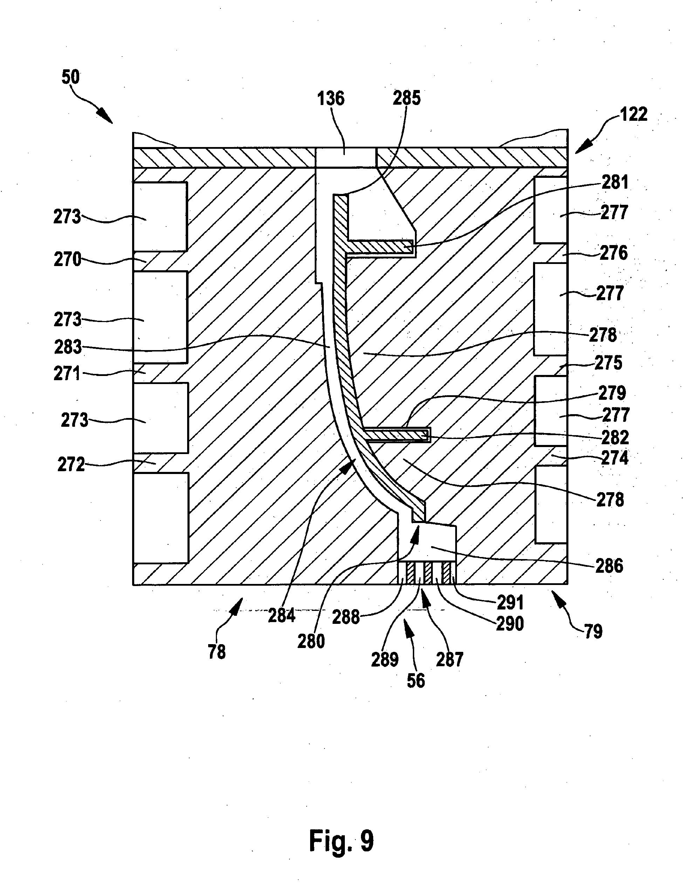

Die Topfzeit der Frischbetonmischung beträgt ca. 20 Minuten, danach verschlechtert sich ihre Verarbeitungseigenschaft, was sich negativ auf die Produktqualität auswirken kann. Die Topfzeit ist also die Zeit zwischen dem Anmischen einer mehrkomponentigen Substanz und dem Ende ihrer Verarbeitbarkeit, sozusagen die Zeitspanne, in der sich die Substanz noch "aus dem Topf nehmen" und verarbeiten lässt. Meist zeigt sich das Ende der Topfzeit durch deutlichen Viskositätsanstieg, der eine weitere Verarbeitung verhindert. Es empfiehlt sich daher, jeweils nur eine kleine Frischbetonmenge von ca. 50 bis 100 kg herzustellen, die schnell aufgebraucht ist. Der hergestellte Frischbeton wird aus dem Mischer 14 auf ein Abzugsband 15 überführt und von diesem einer Kernschießvorrichtung 16 zugeführt. Die Kernschießvorrichtung 16 ist in den Figuren 2 bis 5 näher beschrieben. In der Kernschießvorrichtung 16 ist ein aufrecht stehender Kernkasten 17 zu sehen. Dieser Kernkasten 17 besteht aus einem ersten Kastenteil 19, dem so genannten Kernoberkasten 19, und einem zweiten Kastenteil 18, dem so genannten Kernunterkasten 18. Die Details eines Kernkastens sind später in den Figuren 9 bis 14 beschrieben.

Das Einschießen des Frischbetons in den Kernkasten 17 erfolgt durch einen Druckluftstoß. Dabei wird der Frischbeton durch den eintretenden Luftstrom in ein Zweiphasengemisch aus Druckluft und Betonpartikeln verwandelt. Die Betonpartikel werden vom Luftstrom über eine hier nicht zu erkennende Einschussöffnung in den Kernkasten 17 eingetragen, wo sie aufgrund ihrer hohen kinetischen Energie sehr stark verdichtet werden. Die hohe Verdichtung bewirkt eine Porosität bzw. Rohdichte der Zubehörsteine von ca. 16 % bis 18 % (gemessen nach DIN 52102), was den Zubehörsteinen eine hohe Frost-Tau-Wechselbeständigkeit verleiht. Zum Einschießen des Frischbetons sollte die Druckluft einen Druck von mindestens 4 · 10⁵ Pa aufweisen. Optimale Ergebnisse ergeben sich bei Drücken von ca. 6 · 10⁵ Pa bis 10 · 10⁵ Pa. Dieser Druck sollte mindestens eine Sekunde, jedoch nicht mehr als fünf Sekunden aufrechterhalten werden. Vorzugsweise wird der Druck für eine bis drei Sekunden aufrechterhalten.

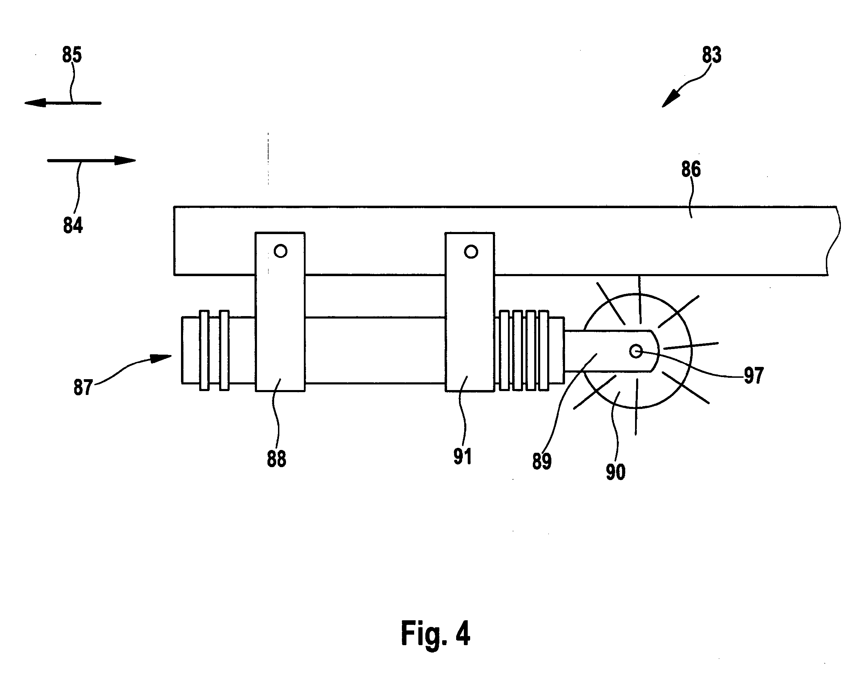

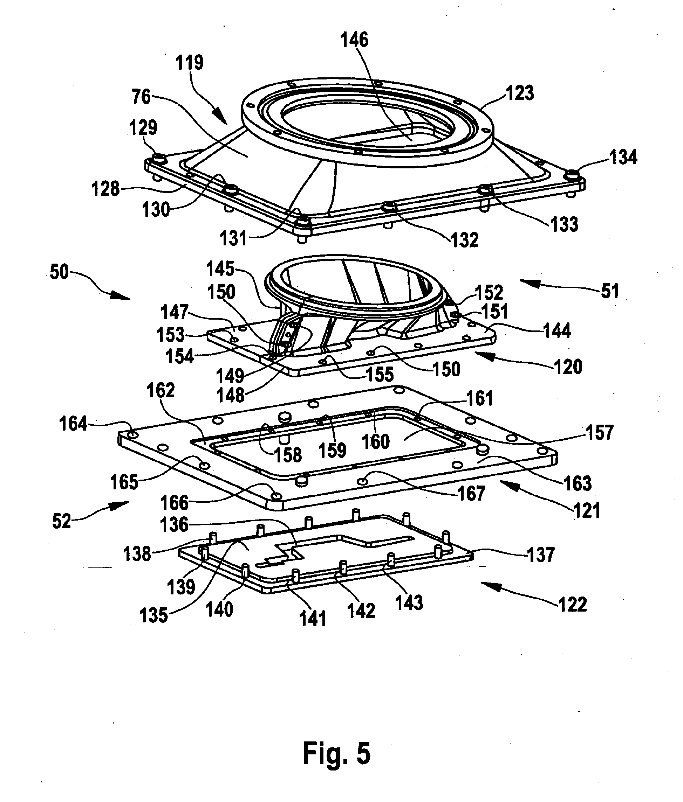

Nach dem Schießvorgang wird der gefüllte Kernkasten 17 durch einen hydraulischen Hubzylinder in der Kernschießvorrichtung 16 abgesenkt. Da der Frischbeton im Bereich der Einschussöffnung des Kernkastens 17 eine geringere Verdichtung aufweist, muss der im Einschusskanal befindliche Frischbeton mittels einer Nachverdichtungseinheit nachverdichtet werden. Diese Nachverdichtungseinheit wird im Zusammenhang mit Fig. 4 und 5 beschrieben. Von einer Roboter-Einheit 20 wird der gefüllte Kernkasten 17 aus der Kernschießvorrichtung 16 entnommen und durch eine erste Drehbewegung in Richtung des Pfeils 21 in eine Handlingstation 22 überführt. In der Handlingstation 22 werden mehrere Verfahrenschritte durchgeführt, die nachfolgend beschrieben werden.

Die Handlingstation 22 weist eine erste Aufnahmevorrichtung 23 auf, in der die Roboter-Einheit 20 den gefüllten Kernkasten 17 absetzt. Nach dem Absetzen entriegelt die Roboter-Einheit 20 pneumatisch den Kernoberkasten 19 und den Kernunterkasten 18. In der Fig. 1 ist ein solcher entriegelter Kernkasten, bestehend aus einem ersten Kernunterkasten 24 und einem ersten Kernoberkasten 25 zu sehen. Dabei ist der erste Kernunterkasten 24 mit einem geschossenen Zubehörstein 26 in der ersten Aufnahmevorrichtung 23 dargestellt. Der erste Kernoberkasten 25 ist durch die Roboter-Einheit 20 angehoben und in eine zweite Aufnahmevorrichtung 27 gefahren worden. Hier wurde der erste Kernoberkasten 25 auf einen in der Fig. 1 nicht zu sehenden zweiten Kernunterkasten abgesenkt, in den bereits von einem Mitarbeiter 28 ein Formträger eingelegt wurde. Die Roboter-Einheit 20 verriegelt den ersten Kernoberkasten 25 mit dem zweiten Kernunterkasten, wodurch ein zweiter Kernkasten 29 entsteht, der von der Roboter-Einheit 20 durch eine zweite Drehbewegung in Richtung des Pfeils 30 der Kernschießvorrichtung 16 zugeführt werden kann.

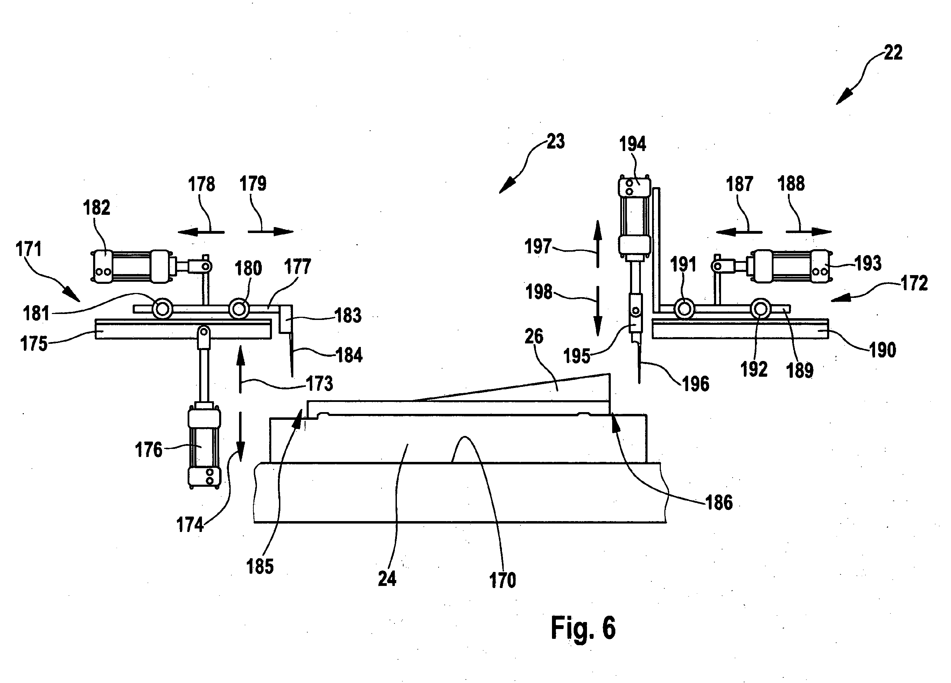

Bevor der Zubehörstein 26 aus dem in der ersten Aufnahmevorrichtung 23 befindlichen ersten Kernunterkasten 24 herausgenommen werden kann, werden die am kopf- und fußseitigen Rand des Zubehörsteins 26 befindlichen Grate mittels Schneidvorrichtungen vom Zubehörstein 26 abgetrennt. Diese Schneidvorrichtungen werden in Fig. 6 detailliert beschrieben. Nach dem Schneidvorgang wird der auf einem Formträger liegende Zubehörstein 26 manuell aus dem ersten Kernunterkasten 24 entnommen und auf einer Fördereinrichtung 31 abgesetzt, die den Zubehörstein 26 einer Farbbeschichtungsanlage 32 zum Zwecke der Nassbeschichtung zuführt.

Um eine hohe Abformgenauigkeit zu gewährleisten, werden die Kernunterkästen und die Kernoberkästen jeweils nach dem dritten Schießvorgang gereinigt. Die Dauer eines Schießvorgangs beträgt in der Regel 45 Sekunden. Die Reinigung geschieht mittels Druckluft- oder Wasserdampfstrahls. Ferner wird ein Trennmittel aufgetragen, um die Anhaftungen des Zubehörsteins im Kernkasten zu vermeiden. Als Trennmittel kann beispielsweise ein Bioöl verwendet werden, die Auftragsmenge sollte dabei ca. 1 g betragen. Dieses Auftragen kann manuell oder maschinell erfolgen.

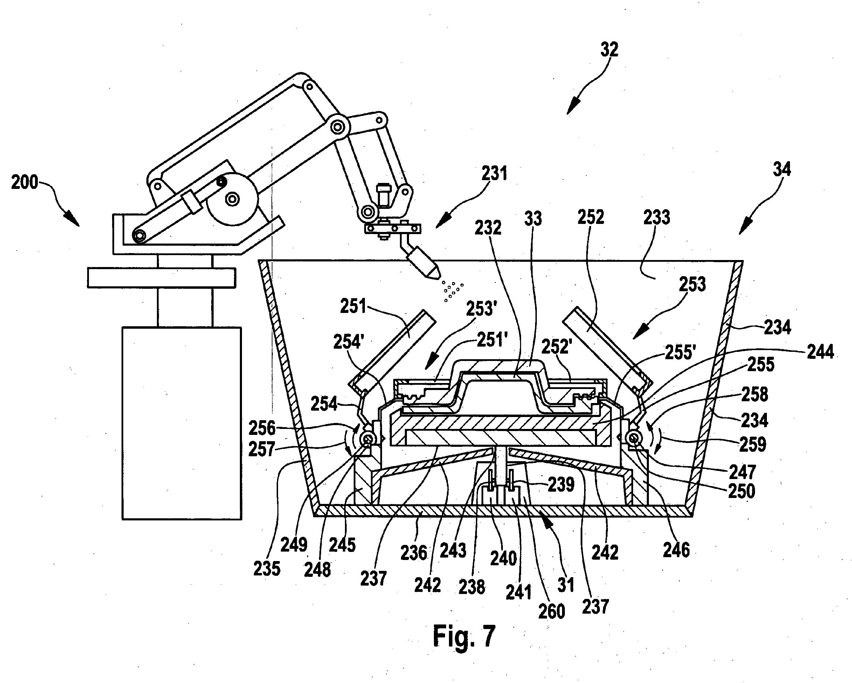

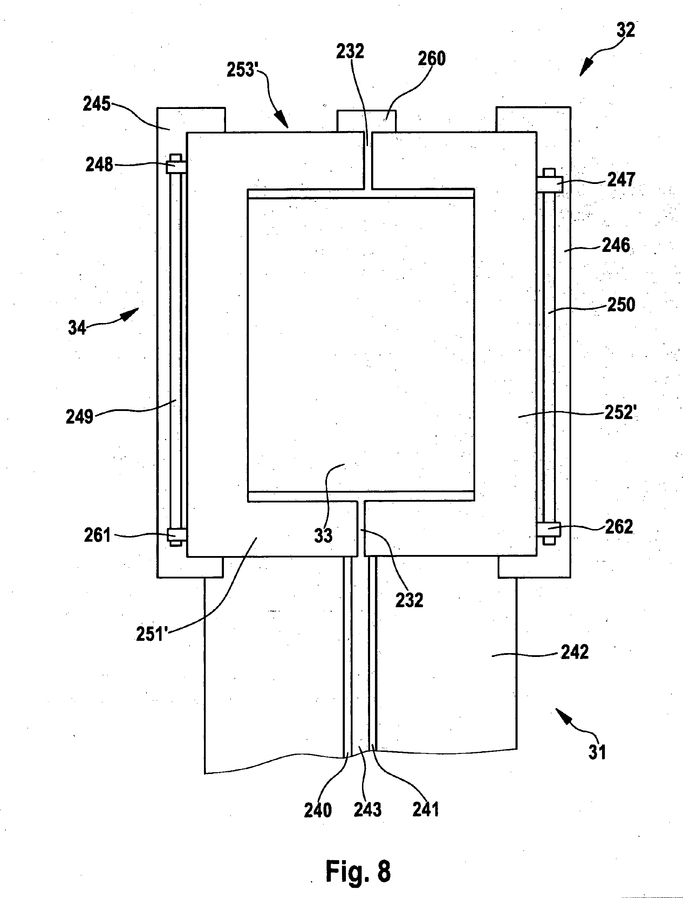

In der Farbbeschichtungsanlage 32 befindet sich bereits ein Zubehörstein 33, der von der Fördereinrichtung 31 in eine Sprühkammer 34 transportiert und unterhalb einer beweglichen Düsenanordnung positioniert wurde. Da der Zubehörstein in der Draufsicht gesehen den Formträger nur teilweise überdeckt, werden die nicht überdeckten Bereiche des Formträgers mit Hilfe einer Schablone abgedeckt, sodass der Formträger nicht mit Farbe verunreinigt wird (Fig. 7 und 8). Sobald die Schablone positioniert ist, fährt die bewegbare Düsenanordnung das komplette Profil des Zubehörsteins ab, wobei die Polymerdispersionsfarbe aufgetragen wird. Die Farbmenge beträgt dabei mindestens 15 g pro Zubehörstein. Da der verdichtete Frischbeton des Zubehörsteins noch feucht ist, ergibt sich zwischen der Polymerdispersionsfarbe und der Oberfläche des Zubehörsteins eine besonders gute Vernetzung, wodurch eine dauerhafte Beschichtung entsteht. Nach der Beendigung des Beschichtungsvorganges wird der Zubehörstein 33 von der Fördereinrichtung 31 wieder aus der Sprühkammer 34 entfernt, so dass er manuell in einen Trockenkammerwagen 35 überführt werden kann.

Sobald der Trockenkammerwagen 35 vollständig mit Zubehörsteinen bestückt ist, wird er in eine Trockenkammer 36 gefahren, wo die Zubehörsteine während einer Verweildauer von 6 bis 10 Stunden und bei einer Temperatur zwischen 45° bis 60° Celsius aushärten. Um eine vollständige Hydratation zu erreichen, wird der Trockenkammer 36 während des Aushärtevorgangs regelmäßig Wasserdampf zugeführt, was durch den Pfeil 37 verdeutlicht wird. Die relative Luftfeuchtigkeit wird dadurch in einem Bereich von 65 bis 90 % gehalten. Am Ende der Verweildauer besitzen die Zubehörsteine eine ausreichend hohe Festigkeit, die es erlaubt, die Zubehörsteine von dem Formträger zu trennen.

Da die so hergestellten Zubehörsteine monolithisch aus nur einem Material bestehen, weisen diese überall die gleiche Oberflächengüte auf. Der ausgehärtete Zubehörstein wird nun vorzugsweise manuell von dem Formträger, dem so genannten Pallet, getrennt. Diese Trennung des Zubehörsteins vom Formträger wird Ausschalen genannt. Nachdem der Zubehörstein vom Formträger getrennt worden ist, können die Zubehörsteine weiteren, in der Fig. 1 nicht dargestellten Arbeitsstationen zugeführt werden, beispielsweise einer Verpackungsstation.

Fig. 2 zeigt die Kernschießvorrichtung 16, bestehend aus einem Hauptteil 40 sowie einem Hubzylinder 41. Der Hauptteil 40 sowie der Hubzylinder 41 sind beide auf einem Fuß 54 angeordnet. Der Hauptteil 40 besteht aus einem Maschinenständer 42, einem Mittelteil 43 sowie einem Zylinder 44. Oberhalb des Zylinders 44 ist ein Verbindungselement 45, das als Dosierelement dient, angeordnet, das den Zylinder 44 mit einem Trichter 46 verbindet. Dabei ist das Verbindungselement 45 über einen Ring 47 mit dem Zylinder 44 und mit dem Trichter 46 über einen Flansch 48 verbunden.

Ferner ist in Fig. 2 zu erkennen, dass das Verbindungselement 45 über ein Schaltungselement 49 verfügt. Am unteren Abschnitt des Zylinders 44 ist eine Schießeinheit 50 angeordnet. Diese Schießeinheit 50 besteht aus einem Schießkopf 51 sowie einer Schießplatte 52. Der Maschinenständer 42 ist in einem Sockel 53 angeordnet, der mit dem Fuß 54 fest verbunden ist. An dem Maschinenständer 42 ist eine Spannvorrichtung 55 zum Halten eines Kernkastens 56 angeordnet. Diese Spannvorrichtung 55 besteht im Wesentlichen aus zwei einander gegenüberliegenden Armen, die mit ihrem einen Ende mit dem Maschinenständer 42 verbunden sind und an ihrem anderen Ende eine an einem Gelenk angeordnete Haltebacke aufweisen. In Fig. 2 ist nur ein Arm 58 zu sehen, der an seinem einen Ende mit dem Maschinenständer 42 verbunden ist und an dem anderen Ende eine an einem Gelenk 57 angeordnete Haltebacke 59 aufweist. Dabei wird der Kernkasten 56 zwischen den Haltebacken der Spannvorrichtung 55 gehalten. Beide Haltebacken sind über die Gelenke beweglich an den Armen angeordnet.

Der Kernkasten 56 ist auf einer Auflage 60 des Hubzylinders 41 angeordnet. Diese Auflage 60 befindet sich auf einem Zylinder 61, der in einem Sockel 62 verankert ist. Der Hubzylinder 41 kann mittels einer hydraulischen Kraft in Richtung der Pfeile 63 bzw. 64 bewegt werden. Damit ist es möglich, den auf der Auflage 60 angeordneten Kernkasten 56 entweder in Richtung der Schießeinheit 50 hinzubewegen oder den Kernkasten 56 von dieser wegzubewegen. Der Mittelteil 43 sowie der Maschinenständer 42 sind jeweils über Leitungen 65 bis 67, z. B. Rohre, mit einer von einem Motor 68 angetriebenen Pumpvorrichtung 69 verbunden. An der Pumpvorrichtung 69 sind zwei Manometer 70, 71 zu erkennen. Mittels der Pumpvorrichtung 69 ist es möglich, der Kernschießvorrichtung 16 über die Leitungen 65 bis 67 Druckluft zuzuführen bzw. diese wieder aus der Kernschießvorrichtung 16 abzuziehen. Wie in Fig. 2 zu erkennen, ist die Leitung 65 mit dem Mittelteil 43 über einen Aufsatz 72 verbunden. Die Leitungen 65 bis 67 verfügen über Ein- und Auslassventile, die hier jedoch nicht dargestellt sind.

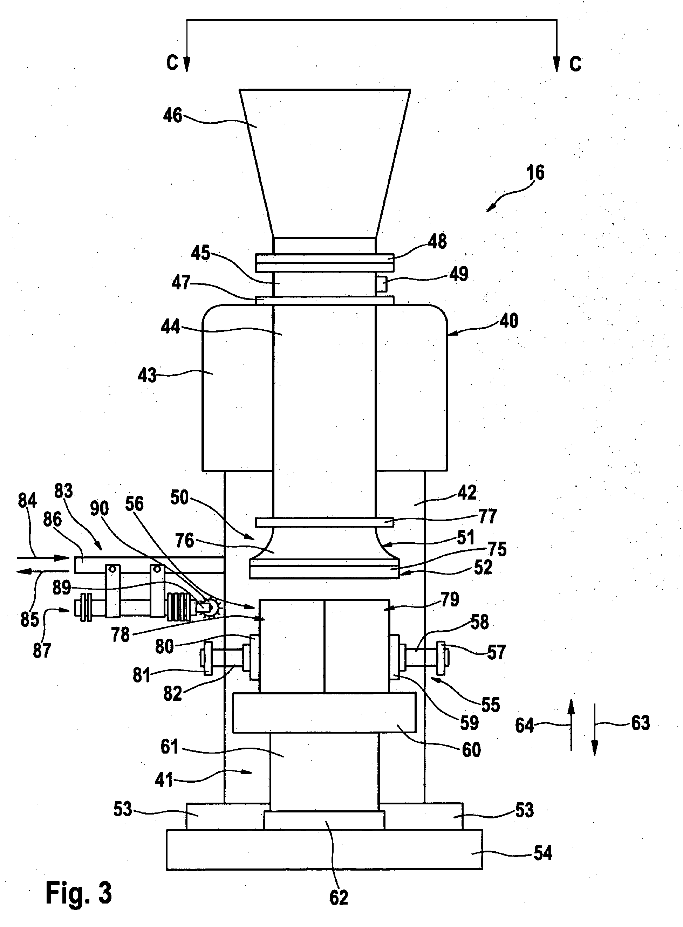

In Fig. 3 ist eine Frontansicht der in Fig. 2 gezeigten Kernschießvorrichtung 16 mit Blick in Richtung B dargestellt. Zu sehen sind wiederum der Hauptteil 40 sowie der Hubzylinder 41, die auf dem Fuß 54 angeordnet sind. Der Hauptteil 40 besteht aus dem Maschinenständer 42, dem Mitteilteil 43 und dem Zylinder 44. Zu erkennen ist ferner der Trichter 46, der über den Flansch 48 mit dem Verbindungselement 45 verbunden ist. Dieses Verbindungselement 45 verfügt über das Schaltungselement 49, bei dem es sich beispielsweise um ein Rad oder einen Hebel handeln kann. In der Fig. 3 ist das Schaltungselement 49 als ein Rad ausgebildet. Am unteren Ende des Zylinders 44 ist die Schießeinheit 50 angeordnet, die aus einem unteren Teil 75, einem mittleren Teil 76 und einem oberen Teil 77 besteht. Dabei ist der Schießkopf 51 über den oberen Teil 77 mit dem Zylinder 44 verbunden. An dem unteren Teil 75 befindet sich die Schießplatte 52. Diese Schießplatte 52 ist mit dem Schießkopf 51 über Verbindungselemente, die hier nicht dargestellt sind, verbunden. Ebenfalls über Verbindungselemente ist der Schießkopf 52 an dem Zylinder 44 angebracht. Auch diese Verbindungselemente sind in Fig. 3 nicht zu erkennen. Der Kernkasten 56, bestehend aus einem Kernoberkasten 78 und einem Kernunterkasten 79, wird durch die Spannvorrichtung 55 gehalten. Diese Spannvorrichtung 55 verfügt über Haltebacken 59, 80, die über Gelenke 57, 81 an Armen 58, 82 beweglich angeordnet sind.

Des Weiteren ist in Fig. 3 eine Nachverdichtungseinheit 83 zu sehen, die einen seitlich am Maschinenständer 42 angeordneten Ausleger 86 aufweist, an dem ein Pneumatikzylinder 87 angeordnet ist. Der Pneumatikzylinder 87 weist eine in Richtung der Pfeile 84, 85 bewegliche Kolbenstange 89 auf, in deren freiem Ende eine drehbare Andruckrolle 90 eingebracht ist. Zum Nachverdichten wird die Kolbenstange 89 mit der daran angeordneten Andruckrolle 90 in Richtung des Pfeils 84, d. h. in Richtung des Kernkastens 56, bewegt. Die Andruckrolle 90 wird dann auf der Stirnseite des Kernkastens 56 abgerollt, wodurch der Frischbeton im Bereich der Einschussöffnung verdichtet wird. Die Einschussöffnung ist in Fig. 3 jedoch nicht zu erkennen.

In Fig. 4 ist die in Fig. 3 beschriebene Nachverdichtungseinheit 83 nochmals im Detail dargestellt. Zu erkennen ist der Ausleger 86, an dem mittels der Halterungen 88, 91 der Pneumatikzylinder 87 angeordnet ist. An dem Pneumatikzylinder 87 ist die Kolbenstange 89 angeordnet, die an ihrem freien Ende einen Spalt aufweist, in dem die Andruckrolle 90 eingebracht ist. Mittels eines Verbindungselements 97 wird die in dem Spalt der Kolbenstange 89 angeordnete Andruckrolle 90 drehbar befestigt. Bei diesem Verbindungselement 97 kann es sich beispielsweise um einen Stift handeln. Der Spalt ist in Fig. 4 nicht zu erkennen. Wie in Fig. 4 dargestellt, kann die Andruckrolle 90 walzenförmig als Bürste ausgebildet sein.

In Fig. 5 ist eine Explosionsdarstellung der Schießeinheit 50 gezeigt. Die Schießeinheit 50 enthält eine Aufnahme 119 für einen Einsatz 120 sowie zwei plattenförmige Elemente 121, 122. Die Aufnahme 119 und der Einsatz 120 bilden den Schießkopf 51 und die beiden plattenförmigen Elemente 121, 122 die Schießplatte 52. Die Aufnahme 119 weist einen ringförmigen ersten Flansch 123 auf, der mittels Befestigungselementen an dem Zylinder 44 der Kernschießvorrichtung 16 angebracht ist (vgl. Fig. 3). Unterhalb des ringförmigen ersten Flansches 123 ist der kegelförmige mittlere Teil 76 angeordnet. An diesen mittleren Teil 76 schließt sich ein rahmenförmiger Flansch 128 an, in den mehrere Verbindungselemente 129 bis 134 eingeführt sind.

Zu erkennen ist in Fig. 5 auch der Einsatz 120, der mit seinem oberen, auf einem plattenähnlichen Teil 144 angeordneten Abschnitt 145 in eine Öffnung 146 der Aufnahme 119 eingebracht werden kann. Der Einsatz 120 weist zwei miteinander verbindbare Teile 147, 148 auf. Diese Teile 147, 148 sind mittels Verbindungselementen 149 bis 152 miteinander verbunden. In dem unteren plattenförmigen Teil 144 sind mehrere Öffnungen 153 bis 156 angeordnet. Der Einsatz 120 besteht vorzugsweise aus Hartmetall.

Das plattenförmige Element 121 besitzt eine Öffnung 157 in seiner Mitte. Umgeben wird diese Öffnung 157 durch eine mit Öffnungen 158 bis 161 versehene Umrandung 162. Diese Umrandung 162 der Öffnung 157 wird von einem Rahmen 163 umgeben, der ebenfalls mehrere Öffnungen 164 bis 167 aufweist. Gegenüber dem Rahmen 163 ist die Umrandung 162 dünner, sodass diese Umrandung 162 eine Auflagefläche für den plattenförmigen Teil 144 des Einsatzes 120 bildet, wohingegen der Rahmen 163 eine Auflagefläche für die Aufnahme 119 bildet. Der Einsatz 120 liegt dann derart auf der Umrandung 162, dass die Öffnungen 153 bis 156 genau oberhalb der Öffnungen 158 bis 161 angeordnet sind.

Das plattenförmige Element 122 besitzt in seinem mittleren Plateau 135 eine Öffnung 136, durch die Beton aus der Kernschießvorrichtung 16 in einen Kernkasten gelangen kann. Diese Öffnung 136 ist somit die Öffnung der Schießeinheit 50. Das Element 122 weist einen Randabschnitt 137 mit mehreren Verbindungselementen 138 bis 143 auf, die in die Öffnungen 158 bis 161 des plattenförmigen Elements 121 und die darüber angeordneten Öffnungen 153 bis 156 des Einsatzes 120 eingreifen können, wodurch die Elemente 121, 122 und der Einsatz 120 fest miteinander verbunden sind.

Durch das Aufsetzen der Aufnahme 119 auf das plattenförmige Element 121 und das Einbringen der Verbindungselemente 129 bis 134 in die Öffnungen 164 bis 167 des Rahmens 163 entsteht die Schießeinheit 50. Die Schießeinheit 50 kann somit einfach von dem Zylinder 44 der Kernschießvorrichtung 16 abgenommen und auseinandergebaut werden. Die Wartung der Schießeinheit 50 gestaltet sich daher einfach.

In Fig. 6 ist ein Ausschnitt der Aufnahmevorrichtung 23 gemäß Fig. 1 der Handlingstation 22 gezeigt, wenn man in Richtung A blickt. In dieser Aufnahmevorrichtung 23 liegt der Kernunterkasten 24 mit dem darauf angeordneten Zubehörstein 26 auf einer Auflagefläche 170 auf. Bei dem in Fig. 6 gezeigten Zubehörstein 26 handelt es sich um einen Lüfterstein. Aufgrund der Trennfuge zwischen Kernober- und Kernunterkasten weist der Zubehörstein 26 Grate auf. Zumindest die Grate am kopf- und fußseitigen Rand 185, 186 des Zubehörsteins 26 müssen vom Zubehörstein 26 abgetrennt werden.

Zu diesem Zweck sind seitlich der Aufnahmevorrichtung 23 zwei Schneidvorrichtungen 171, 172 angeordnet, die jeweils ein Schneidwerkzeug 184 bzw. 196 aufweisen. Die Schneidwerkzeuge 184, 196 sind unterschiedlich aufgebaut, sodass das den kopfseitigen Rand 185 bearbeitende Schneidwerkzeug 184 einen einfachen geraden Schnitt ausführt, und das den fußseitigen Rand 186 bearbeitende Schneidwerkzeug 196 während des geraden Schnitts noch eine Verdichtung der Schnittkante ausführt.

Die Schneidvorrichtung 171 besitzt bewegliche Schienen 175, die über eine Hubvorrichtung 176 in Richtung der Pfeile 173, 174 bewegt werden können. Auf den Schienen 175 ist ein auf Rädern angeordnetes Fahrgestell 177 zu erkennen, das in Richtung der Pfeile 178, 179 bewegt werden kann. Das Fahrgestell 177 hat z. B. wie in Fig. 6 vier Räder, wobei sich jeweils zwei Räder gegenüberliegen, sodass in Fig. 6 nur die Räder 180, 181 zu sehen sind. Das Fahrgestell 177 ist mit einem Antriebsmechanismus 182 verbunden, mittels dessen das Fahrgestell 177 auf den Schienen 175 in Richtung der Pfeile 178, 179 bewegt werden kann.

An einem Ende des Fahrgestells 177 ist ein abnehmbarer Einsatz 183 für das auswechselbare Schneidwerkzeug 184 angeordnet. Mit diesem Schneidwerkzeug 184 wird der Grat am kopfseitigen Rand 185 des Zubehörsteins 26 entfernt. Dazu wird durch Bewegung des Fahrgestells 177 in Richtung des Pfeils 179 das Schneidwerkzeug 184 genau oberhalb der Stelle angeordnet, wo der am Zubehörstein 26 anhaftende Grat abzutrennen ist. Dann werden die Schienen 175 mit dem darauf angeordneten Fahrgestell 177 in Richtung des Pfeils 174 abgesenkt. Dabei dringt das Schneidwerkzeug 184 in das Ende des Frischbetons ein und trennt diesen vom eigentlichen Zubehörstein 26. Durch Bewegen des Fahrgestells 177 in Richtung des Pfeils 178 wird der vom Zubehörstein 26 abgetrennte Frischbeton vom Kernunterkasten 24 entfernt.

Die Schneidvorrichtung 172 besitzt einen ähnlichen konstruktiven Aufbau wie die Schneidvorrichtung 171. Bei der Schneidvorrichtung 172 ist ein in Richtung der Pfeile 187, 188 bewegliches Fahrgestell 189 auf Schienen 190 angeordnet. Das Fahrgestell 189 besitzt Räder, von denen nur die Räder 191, 192 zu sehen sind, da die anderen nicht zu sehenden zwei Räder den Rädern 191, 192 jeweils gegenüber liegen. Das Fahrgestell 189 ist mit einem Antriebsmechanismus 193 verbunden, mittels dessen das Fahrgestell 189 in Richtung der Pfeile 187 bzw. 188 bewegt werden kann.

An dem der Aufnahme 23 (Fig. 1) zugewandten Ende des Fahrgestells 189 ist eine Hubvorrichtung 194 angeordnet, an der mittels eines Einsatzes 195 das abnehmbare Schneidwerkzeug 196 befestigt ist. Mittels dieser Hubvorrichtung 194 kann das Schneidwerkzeug 196 in Richtung der Pfeile 197, 198 bewegt werden.

Durch die Bewegung des Fahrgestells 189 in Richtung des Pfeils 188 wird der abgetrennte Frischbeton vom Zubehörstein 26 entfernt und vom Kernunterkasten 24 geschoben. Vorzugsweise arbeiten beide Schneidvorrichtungen 171, 172 synchron. Ist der Frischbeton vom Kernunterkasten 24 entfernt, gehen die beiden Schneidvorrichtungen 171, 172 wieder in die Ausgangsposition, wie in Fig. 6 gezeigt, zurück.

Obwohl in Fig. 6 nur zwei Varianten von Schneidvorrichtungen gezeigt sind, sind auch noch andere Varianten möglich. Dabei ist lediglich wichtig, dass die Schneidwerkzeuge 184, 196 der jeweiligen Schneidvorrichtung 171, 172 in eine horizontale Richtung, d. h. in Richtung der Pfeile 178, 179 bzw. 187, 188, und in eine vertikale Richtung, d. h. in Richtung der Pfeile 173, 174 bzw. 197, 198, bewegt werden können.

Dadurch, dass die Schneidwerkzeuge 184, 196 während des Schneidvorgangs auch gegen den Zubehörstein 26 gepresst werden, bevor sie den abgetrennten Frischbeton vom Kernunterkasten 24 entfernen, dienen die Schneidvorrichtungen 171, 172 auch zum Nachverdichten des Zubehörsteins.

In Fig. 7 ist die Farbbeschichtungsanlage 32 gezeigt, in welcher der Zubehörstein 33, hier ein Lüfterstein, mit einer Polymerdispersionsfarbe beschichtet werden soll. Zu sehen ist eine nach oben hin offene Sprühkammer 34, neben der eine Robotereinheit 200 angeordnet ist, die eine Düsenanordnung 231 aufweist. Mittels der Robotereinheit 200 kann die Düsenanordnung 231 innerhalb der Sprühkammer 34 bewegt werden. Die Robotereinheit 200 wird von einer in Fig. 7 nicht dargestellten RechnerEinheit angesteuert, in der die Konturen der verschiedenen Zubehörsteine hinterlegt sind. Auf diese Weise kann die Düsenanordnung 231 der Kontur des Zubehörsteins 26 folgend geführt werden, sodass ein optimaler Farbauftrag erfolgt. Da es sich bei dieser Robotereinheit um ein im Handel erhältliches Modell handelt (Modell Fanuc S12 der Fa. KC Robotics, Fairfield, Ohio, USA), wird auf eine detaillierte Beschreibung dieser Robotereinheit 200 verzichtet. Bezüglich Robotereinheiten wird auch auf A. Redford und E. Lo "Montageroboter", VCH-Verlag, 1992, verwiesen.

Der Zubehörstein 33, der auf einem Formträger 232 liegt, wurde über die Fördereinrichtung 31 in die Sprühkammer 34 eingebracht. Zu erkennen sind die Rückwand 233 sowie die beiden Seitenwände 234, 235 und der Boden 236 der Sprühkammer 34. Die Fördereinrichtung 31 besteht aus einem auf Rädern angeordneten T-förmigen Fahrgestell 237, wobei in Fig. 7 nur die Räder 238, 239 zu sehen sind. Diese Räder 238, 239 sind auf Schienen 240, 241 angeordnet, sodass das Fahrgestell 237 in die Sprühkammer 34 hinein- und wieder hinausgefahren werden kann. Dort, wo die Schienen 240, 241 nicht mehr weiter verlaufen, ist ein Stopper 260 vorgesehen. Dieser Stopper 260 kann als ein Block ausgebildet sein. Eine Haube 242 mit einer Durchbrechung 243 dient dem Fahrgestell 237 als Führungselement. Auf dem Fahrgestell 237 liegt eine Auflage 244 auf, auf der sich der Formträger 232 mit dem darauf angeordneten Zubehörstein 33 befindet.

Zu erkennen sind ferner parallel zu beiden Seiten der Haube 237 verlaufende Wände 245, 246. An den oberen Stirnseiten dieser Wände sind jeweils Lagerungen für eine Gelenkstange 249, 250 angeordnet. Von den Lagerungen sind in der Fig, 7 lediglich die Lagerungen 247, 248 zu sehen. An den Gelenkstangen 249, 250 sind jeweils zwei Abdeckungen 251, 252 angeordnet, die zusammen eine Schablone 253 bilden. Diese Schablone 253 dient dazu, den Bereich des Formträgers 232 abzudecken, auf dem der Zubehörstein 33 nicht liegt. Der Zubehörstein 33 wird jedoch nicht von der Schablone 253 abgedeckt. Die Abdeckungen 251, 252 sind über Stege 254, 255 mit der jeweiligen Gelenkstange 249 bzw. 250 verbunden. Über einen hier nicht dargestellten Antrieb können die Gelenkstangen 249, 250 mit den daran angeordneten Abdeckungen 251, 252 in Richtung der Pfeile 256, 257 bzw. 258, 259 bewegt werden. Die Bewegung erfolgt dabei synchron, d. h. die Abdeckung 251 wird in Richtung des Pfeils 257 bewegt, wenn die Abdeckung 252 in Richtung des Pfeils 259 bewegt wird, oder die Abdeckung 251 wird in Richtung des Pfeils 256 bewegt, wenn die Abdeckung 252 in Richtung des Pfeils 258 bewegt wird.

Soll nun der Zubehörstein 33 mit Polymerdispersionsfarbe beschichtet werden, so wird die Abdeckung 251 in Richtung des Pfeils 256 und die Abdeckung 252 in Richtung des Pfeils 258 bewegt. Sobald die Schablone 253 den nicht vom Zubehörstein überdeckten Bereich des Formträgers 232 abdeckt, kann die Robotereinheit 200 mittels der Düsenanordnung 231 den Farbauftrag durchführen.

Der Zustand, in dem die Schablone 253 den nicht vom Zubehörstein 33 bedeckten Bereich des Formträgers 232 abdeckt, ist ebenfalls in Fig. 7 gezeigt. Sie trägt die Bezugszahl 253', und die an den Stegen 254', 255' angeordneten Abdeckungen tragen die Bezugszahlen 251' bzw. 252'.

In Fig. 8 ist eine Draufsicht auf die in Fig. 7 gezeigte Sprühkammer 34 der Farbbeschichtungsanlage 32 dargestellt. Die Wände 233 bis 235 der Sprühkammer 34 und die Robotereinheit 200 mit der Düsenanordnung 231 sind in Fig. 8 der Übersicht halber nicht gezeigt. Zu erkennen ist jedoch der Zustand, in dem die Schablone 253' den nicht vom Zubehörstein 33 bedeckten Bereich des Formträgers 232 fast vollständig abdeckt. Vorzugsweise ist dieser Bereich des Formträgers 232 jedoch vollständig von der Schablone 253' abgedeckt.

Zu sehen ist auch die Fördereinrichtung 31 mit der Haube 242 mit der Durchbrechung 243. Die unterhalb der Haube 242 angeordneten Schienen 240, 241 sind ebenfalls zu erkennen. Am Ende dieser durch die Schienen 240, 241 gebildeten Schienenstrecke ist der Stopper 260 angeordnet. Die Wände 245 und 246, die die Haube 242 zumindest teilweise überdecken, weisen Lagerungen 248, 261 bzw. 247, 262 auf, in denen die Gelenkstangen 249 bzw. 250 angeordnet sind.

In Fig. 9 ist ein Schnitt C-C durch den in Fig. 3 an der Schießeinheit 50 angeordneten Kernkasten 56 dargestellt. Von der Schießeinheit 50 ist jedoch nur das plattenförmige Element 122 mit der Öffnung 136 zu erkennen (vgl. Fig. 5). Der Rest der Schießeinheit 50 ist der Übersicht halber nicht dargestellt.

Der Kernoberkasten 78 des Kernkastens 56 besitzt zu der zum Kernunterkasten 79 abgewandten Seite mehrere Verstrebungen 270 bis 272. Zu erkennen ist ferner eine Wandung 273, die mit den Verstrebungen 270 bis 272 in Verbindung steht. Auch der Kernunterkasten 79 weist mehrere Verstrebungen 274 bis 276 auf, die mit einer Wandung 277 in Verbindung stehen. Der Kernunterkasten 79 weist ferner eine Erhebung 278 sowie eine Einkerbung 279 auf. Auf der Erhebung 278 des Unterteils 79 liegt ein Formträger 280 auf. Der Formträger 280 weist dabei zwei Stege 281, 282 auf, wobei der eine Steg 281 die Erhebung 278 des Kernunterkastens 78 umgibt und der andere Steg 282 in die Einkerbung 279 eingreift. Dadurch ist der Formträger 280 fest auf dem Kernunterkasten 79 angeordnet. Zwischen dem Formträger 280 und einer Einbuchtung 283 des Kernoberkastens 78 ist ein Einschusskanal 284 zu erkennen, der im Bereich des Stegs 281 des Formträgers 280 und der Öffnung 136 der Schießplatte 52 seine größte Ausdehnung erfährt. Diese Ausdehnung wird als Abschlusskante 285 bezeichnet. Des Weiteren ist in Fig. 9 eine Ausfräsung 286 zu erkennen, durch welche die Luft entweichen kann, wenn Beton in den Einschusskanal 284 eingeschossen wird. Damit kann sich in dem Einschusskanal 284 sowie in der Abschlusskante 285 der verdichtete Beton ansammeln. Da der an der Abschlusskante 285 und an der Ausfräsung 286 angesammelte Beton einen Grat an dem Zubehörstein bildet, wird dieser, wie in Fig. 6 beschrieben, mittels der Schneidvorrichtungen 171, 172 entfernt.

Im Bereich der Ausfräsung 286 befindet sich zudem eine Siebdüse 287 als Teil des Kernunterkastens 78. Diese Siebdüse 287 verfügt über mehrere Öffnungen 288 bis 291, über die Luft aus dem Kernkasten 56 entweichen kann, wenn Beton in diesen eingeschossen wird.

Zwar besitzt die Siebdüse 287 in Fig. 9 mehrere Öffnungen 288 bis 291, jedoch ist es möglich, dass diese auch nur über eine einzige Öffnung verfügt. Eine solche Variante ist jedoch nicht gezeigt.

Die zumindest eine Öffnung der Siebdüse 287 muss dabei einen solchen Durchmesser aufweisen, dass zwar Luft, aber nicht Beton aus dem Kernkasten 56 gelangen kann. Es versteht sich, dass die Siebdüse 287 auch an dem Kernunterkasten 79 angeordnet sein kann oder dass die Siebdüse sowohl vom Kernunterkasten 79 als auch vom Kernoberkasten 78 gebildet wird.

Die Siebdüsen können am Ende des Einschusskanals oder seitlich am Einschusskanal angeordnet sein. Da die Siebdüsen am Zubehörstein Absaugmarken verursachen, sind sie so im Kernkasten angeordnet, dass sie in Bezug auf den Zubehörstein in Bereichen angeordnet sind, dass diese später im verlegten Zustand nicht mehr sichtbar sind. Ausfräsungen können zusätzlich zu den Siebdüsen eingesetzt werden. Der Querschnitt einer Ausfräsung ist kleiner als der Durchmesser der Betonpartikel, sodass diese nicht aus dem Kernkasten entweichen können. Solche Ausfräsungen sind jedoch in Fig. 9 nicht dargestellt.

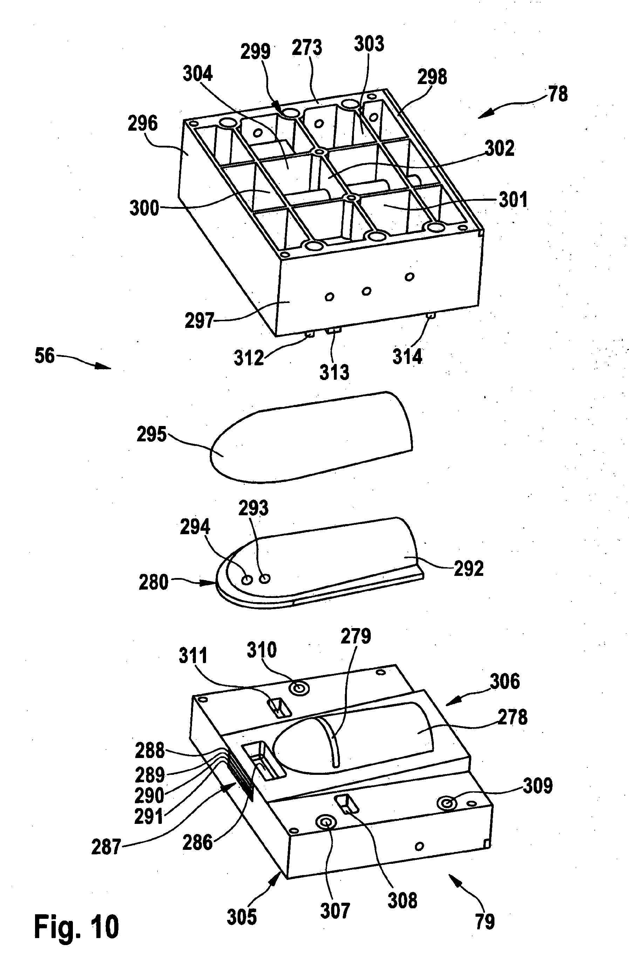

Fig. 10 zeigt eine Explosionsdarstellung des in Fig. 9 gezeigten Kernkastens 56, jedoch um 90 Grad im Uhrzeigersinn gedreht. Das plattenförmige Element 122 ist in Fig. 10 nicht dargestellt. Zu erkennen sind wiederum der Kernoberkasten 78, der Kernunterkasten 79 sowie der Formträger 280 mit einer Erhebung 292. An der Erhebung 292 sind Siebdüsen angeordnet, von denen in Fig. 10 zwei Siebdüsen 293, 294 zu sehen sind. Die Siebdüsen 293, 294 dienen als Öffnungen, aus denen Luft entweichen kann, die sich zwischen dem Kernunterkasten 79 und dem Formträger 280 befindet, wenn Beton in den Kernkasten 56 eingeschlossen wird. Da die Siebdüsen 293, 294 einen nur geringen Siebdurchmesser haben, ist es für den Beton nahezu unmöglich, zwischen den Kernunterkasten 79 und den Formträger 280 zu gelangen. Durch diese am Formträger 280 angeordneten Siebdüsen 293, 294 kann die unterhalb eines Zubehörsteins 295 befindliche Luft entweichen.

Bei dem in Fig. 10 gezeigten Zubehörstein 295 handelt es sich um einen Gratanfangstein. Deutlich zu erkennen ist, dass dieser Zubehörstein 295 eine Form aufweist, die derjenigen der Erhebung 292 des Formträgers 280 ähnelt bzw. entspricht. Weiterhin sind die Wandungen 273, 296 bis 298 zu erkennen. Diese Wandungen 273, 296 bis 298 sind über eine Anordnung 299, bestehend aus mehreren Verstrebungen 300 bis 304, miteinander verbunden. Obwohl auch eine andere Anordnung 299 denkbar ist, so muss diese stets derart aufgebaut sein, dass sie hohen Drücken und hohen Temperaturen standhalten kann, die dann entstehen, wenn Beton durch das Kernschießen in den Einschusskanal 284 des Kernkastens 56 eingebracht wird. Der Einschusskanal 284 ist in der Fig. 10 jedoch nicht zu erkennen.

Der Kernunterkasten 79 verfügt über ein Unterteil 305, auf dem ein Oberteil 306 angeordnet ist. Auf diesem Oberteil 306 ist die Erhebung 278 angebracht, die die Einkerbung 279 aufweist. Diese Erhebung 278 ist derart geformt, dass auf ihr der Formträger 280 passgenau aufsitzen kann. Ferner verfügt das Unterteil 305 des Kernunterkastens 79 über mehrere Öffnungen 307 bis 311, in die Verbindungselemente des Kernoberkastens 78 eingebracht werden können, wobei nur die Verbindungselemente 312 bis 314 des Kernoberkastens 78 zu erkennen sind. Des Weiteren zu erkennen ist die Ausfräsung 286 in dem Unterteil 305. Über diese Ausfräsung 286 kann beim Einschießen des Frischbetons die Luft über die Siebdüse 287 aus dem Kernkasten 56 entweichen. Dabei kann die Siebdüse auch an den Wänden 297 bzw. 273 angeordnet sein. Auch ist es möglich, mehrere Siebdüsen vorzusehen.

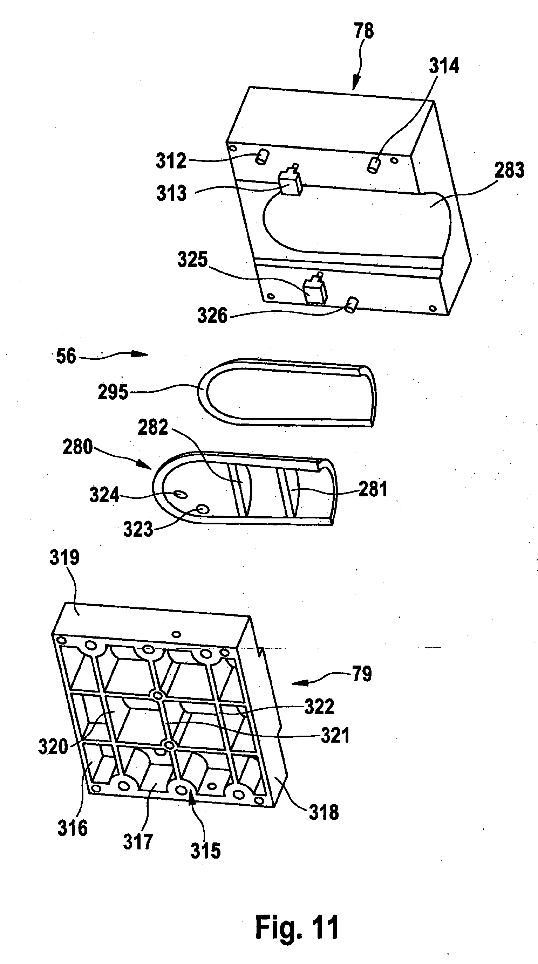

In Fig. 11 ist eine weitere Ansicht des in Fig. 10 gezeigten Kernkastens 56 dargestellt, und zwar in einer Ansicht schräg von unten. Zu erkennen sind wiederum der Kernoberkasten 78, der Kernunterkasten 79 und der Formträger 280, die den Kernkasten 56 bilden. Der Kernunterkasten 79 des Kernkastens 56 weist eine Anordnung 315 auf, die der Anordnung 299 des Kernoberkastens 78 in ihrem Aufbau ähnelt. Auch hier sind Wandungen 316 bis 319 über Verstrebungen 320 bis 322 miteinander verbunden. Wie auch die Anordnung 299 dient diese Anordnung 315 dazu, dass der Kernkasten 56 den beim Einschießen des Betons entstehenden Temperaturen und Drücken standhält. Über die beiden Stege 281, 282 wird der Formträger 280 passgenau auf die Erhebung 278 aufgebracht. Die Erhebung 278 ist jedoch, in Fig. 11 nicht zu sehen. Ferner sind zwei Siebdüsen 323, 324 zu sehen. Zu erkennen sind ferner die Verbindungselemente 312 bis 314, 325, 326, die dazu dienen, den Kernoberkasten 78 mit dem Kernunterkasten 79 fest zu verbinden. Ferner dargestellt ist der Zubehörstein 295, der entsteht, wenn Beton in den Einschusskanal 284 des Kernkastens 56 eingebracht wird.

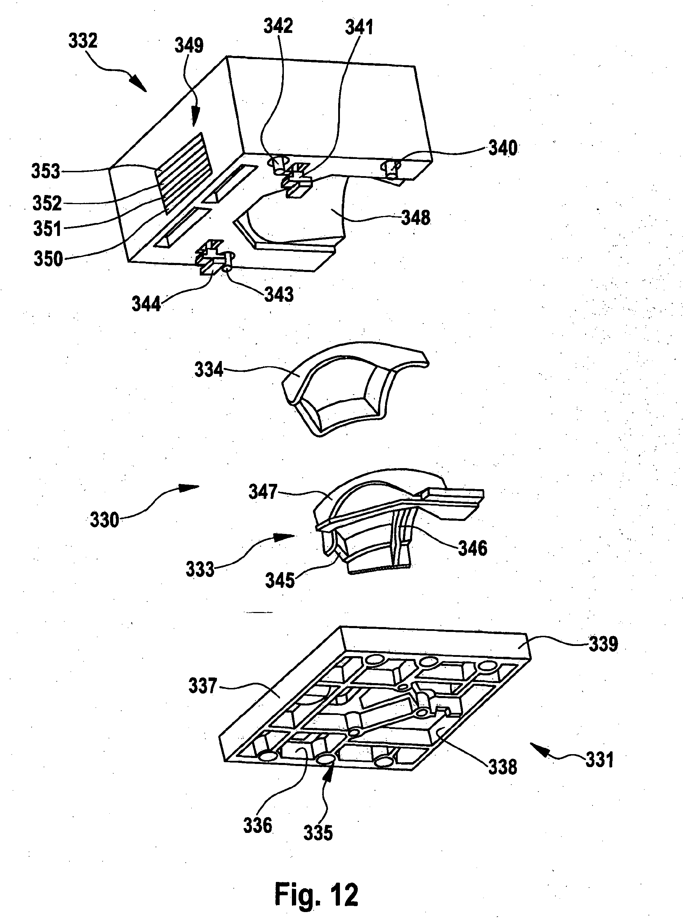

In Fig. 12 ist eine Explosionsdarstellung einer Variante des in Fig. 10 gezeigten Kernkastens 56 dargestellt. Dieser Kernkasten 330 besteht aus einem Kernunterkasten 331, einem Kernoberkasten 332 und einem Formträger 333. Der mit diesem Kernkasten 330 hergestellte Zubehörstein 334 ist eine Walmkappe. Wie auch der Kernunterkasten 79 des Kernkastens 56 verfügt dieser Kernunterkasten 331 des Kernkastens 330 über eine Anordnung 335, die zwischen Wandungen 336 bis 339 des Kernunterkastens 331 liegt. Auch diese Anordnung 335 dient dazu, dass der Kernkasten 330 den hohen Drücken sowie den hohen Temperaturen standhält. Der Kernoberkasten 332 verfügt über Verbindungsstücke 340 bis 344, mittels denen der Kernoberkasten 332 fest mit dem Kernunterkasten 331 verbunden werden kann. Der Formträger 333 weist im unteren Bereich Stege auf, wobei nur die Stege 345 und 346 zu sehen sind. Zu erkennen ist ferner ein Oberteil 347 des Formträgers 333 und eine Einbuchtung 348 des Kernoberkastens 332. Das Oberteil 347 kann dabei in der Einbuchtung 348 angeordnet werden. Das Oberteil 347 ist dann derart von der Einbuchtung 348 beabstandet, dass auch hier ein Einschusskanal gebildet wird, so dass beim Einschießen von Beton in den Kernkasten 330 ein Zubehörstein 334 geformt wird, dessen Form und Größe sich genau aus dem Abstand zwischen dem Oberteil 347 und der Einbuchtung 348 ergibt.

In Fig. 12 ist zudem eine Siebdüse 349 mit den Öffnungen 350 bis 353 an dem Kernoberkasten 332 angeordnet. Die Öffnungen 350 bis 353 verfügen dabei über einen solchen Durchmesser, dass zwar Luft, aber nicht Beton aus dem Kernkasten 330 entweichen kann. Obwohl die Öffnungen 350 bis 353 in Fig. 12 als Schlitze ausgebildet sind, können sie auch eine andere Form haben. So ist es zum Beispiel denkbar, dass die Siebdüse 349 über runde Öffnungen verfügt. Es ist jedoch auch denkbar, dass der Durchmesser der Öffnung so groß ist, dass auch Beton aus der Öffnung gelangen kann. In diesem Fall ist es nötig, z. B. ein Netz oder Gitter in der Öffnung anzuordnen, sodass Beton nicht aus dem Kernkasten 330 gelangen kann.

Wie bereits in dem ersten Ausführungsbeispiel erwähnt, ist es möglich, die Siebdüse 349 an dem Kernunterkasten 331 oder sowohl am Kernoberkasten 332 als auch am Kernunterkasten 331 anzuordnen.

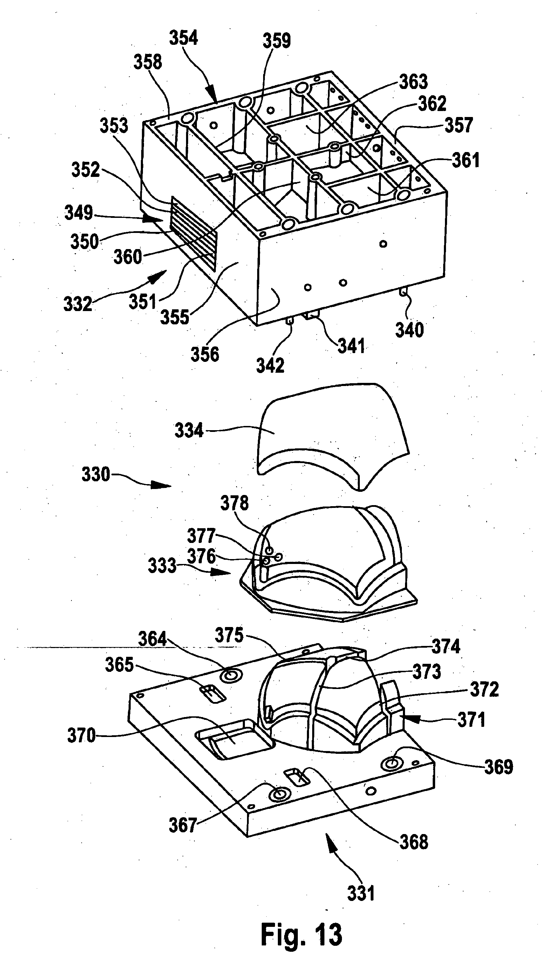

In Fig. 13 ist eine weitere Ansicht des Kernkastens 330 gemäß Fig. 12 dargestellt. Dabei ist der Kernkasten 330 so gedreht worden, dass man nunmehr in Richtung der Unterseite des Kernoberkastens 332 blickt. Der Kernkasten 332 weist mehrere Wände 355 bis 358 auf, zwischen denen sich eine Anordnung 354 befindet. Auch diese Anordnung 354 besteht aus mehreren miteinander verbundenen Verstrebungen 359 bis 363, die die Wände 355 bis 358 miteinander verbinden. Auch die Anordnung 354 dient dazu, dass der Kernkasten 330 hohen Temperaturen und hohen Drücken, denen er während des Einschießens des Betons ausgesetzt ist, standhält. Wie der Kernoberkasten 78 weist auch dieser Kernoberkasten 332 mehrere Verbindungselemente auf, mit denen der Kernoberkasten 332 mit dem Kernunterkasten 331 verbunden werden kann. In Fig. 13 sind jedoch nur die Verbindungselemente 340 bis 342 zu erkennen. Der Kernunterkasten 331 verfügt über mehrere Verbindungsstellen 364 bis 369 für das Einbringen der Verbindungselemente 340 bis 342 des Kernoberkastens 332. Ebenfalls zu erkennen ist eine Ausfräsung 370 in dem Kernunterkasten 331. Der Kernunterkasten 331 weist zudem eine Erhebung 371 auf, in der mehrere Einkerbungen 372 bis 375 eingebracht sind. In diese Einkerbungen 372 bis 375 können die Stege des Formträgers 333 eingebracht werden, so dass der Formträger 333 fest auf dem Kernunterkasten 331 angeordnet ist.

Ferner ist in Fig. 13 zu sehen, dass der Formträger 333 - wie auch der Formträger 280 - Siebdüsen 376 bis 378 aufweist. Auch diese Siebdüsen 376 bis 378 dienen dazu, dass die Luft, welche sich beim Einschießen des Betons in den Kernkasten 330 zwischen dem Formträger 333 und der Erhebung 371 des Kernunterkastens 331 befindet, entweichen kann.

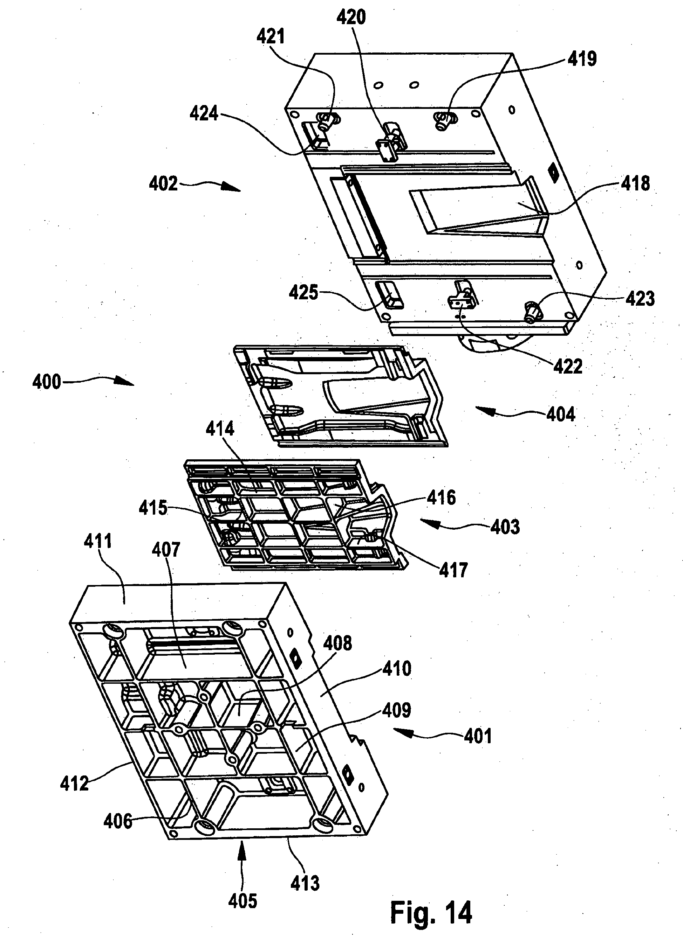

In Fig. 14 ist eine Explosionsdarstellung einer weiteren Variante des in Fig. 10 gezeigten Kernkastens 56 gezeigt. Dieser Kernkasten 400 besteht wiederum aus einem Kernunterkasten 401 und einem Kernoberkasten 402 sowie einem Formträger 403. Ferner ist ein Zubehörstein 404 dargestellt. Bei dem mit diesem Kernkasten 400 hergestellten Zubehörstein 404 handelt es sich um einen Lüfterstein.

Der Kernunterkasten 401 besitzt ebenfalls eine Anordnung 405 mit mehreren Verstrebungen 406 bis 409, die zwischen den Wänden 410 bis 413 angeordnet sind.

Der Formträger 403 besitzt an seiner Unterseite mehrere Stege 414 bis 417, die in Einkerbungen einer auf dem Kernunterkasten 401 angeordneten Erhebung eingreifen können. Die Erhebung sowie die Einkerbungen sind jedoch in Fig. 14 nicht zu erkennen. Ebenso nicht zu erkennen ist eine Siebdüse, die an dem Kernunterkasten 401 angeordnet ist. Der Kernoberkasten 402 besitzt eine Einbuchtung 418, in welcher der Formträger 403 zumindest teilweise angeordnet ist, wenn der Kernkasten 400 zusammengebaut ist. Dabei ist zwischen der Einbuchtung 418 und dem Formträger 403 ein Einschusskanal vorhanden, in den der Beton eingeschossen wird, sodass der Zubehörstein 404 entsteht.

Der Kernoberkasten 402 weist zudem mehrere Verbindungselemente 419 bis 423 sowie Öffnungen 424, 425 auf, über die der Kernoberkasten 402 fest mit dem Kernunterkasten 401 verbunden werden kann. Der Kernoberkasten 402 besitzt eine Anordnung mit mehreren Verstrebungen, die der Anordnung 405 des Kernunterkastens 401 ähnlich ist, jedoch in Fig. 14 nicht zu sehen ist.

Es versteht sich, dass die in den Fig. 10 bis 14 gezeigten Anordnungen 299, 315, 335, 354 und 405 auch eine andere Form aufweisen können. Auch ist es möglich, auf eine solche Anordnung zu verzichten, falls man einen Kernkasten bereitstellt, der aus einem solchen Material besteht bzw. eine solche Form aufweist, welche es ermöglicht, den beim Einschießen entstehenden hohen Drücken und Temperaturen standzuhalten.

Auch die dargestellten Einkerbungen auf den Erhebungen der Unterkästen können anders ausgestaltet sein.

Aus den Fig. 10 bis 14 zeigt sich somit, dass durch Variation der Kernkästen, d. h. insbesondere der Form der Erhebungen 278, 371, der darauf angeordneten Formträger 280, 333, 403 sowie der Ausbuchtungen der Kernoberkästen 78, 332, 402 Zubehörsteine der unterschiedlichsten Form hergestellt werden können. Selbst die Herstellung von Dachschmuck ist möglich.

## Patentansprüche

1. Verfahren für die Herstellung von Zubehörsteinen (26, 33, 295, 334, 404) mittels einer Kernschießvorrichtung (16) und einem Kernkasten (17, 29, 56, 330, 400), der einen Formträger (232, 333, 403) aufweist mit den folgenden Schritten:
a) es werden wenigstens zwei Komponenten, von denen die eine Komponente Wasser und die andere Komponente Zement ist, in einen Mischer (14) gegeben und zu Frischbeton gemischt;
b) der Frischbeton wird mittels Druckluft durch eine Einschussöffnung des Kernkastens (17, 29, 56, 330, 400) in diesen Kernkasten (17, 29, 56, 330, 400) eingefüllt, **gekennzeichnet durch** folgende Schritte:
c) das Entlüften des Kernkastens (17, 29, 56, 330, 400) erfolgt über zumindest eine an dem Formträger (232, 333, 403) angeordnete Siebdüse (293, 294, 324, 323, 376, 377, 378) und zumindest eine, an einem Kernunterkasten (18, 24, 79, 331, 401) des Kernkastens (17, 29, 56, 330, 400) angeordneten Ausfräsung (286, 370);
d) der in dem Kernkasten (17, 29, 56, 330, 400) gebildete Zubehörstein(26, 33, 295, 334, 404) wird dem Kernkasten (17, 29, 56, 330, 400) entnommen und einer Schneidvorrichtung (171, 172) zugeführt, wo überstehende Teile des Zubehörsteins (26, 33, 295, 334, 404) abgeschnitten werden.

2. Verfahren nach Anspruch 1, **dadurch gekennzeichnet, dass** Sand, Wasser, Zement, Pigmente und Additive dosiert und einem Mischer (14) zugeführt werden.

3. Verfahren nach Anspruch 2, **dadurch gekennzeichnet, dass** dem Mischer 45 bis 75 Gew.% Sand (Typ 0/3), 0 bis 24 Gew.% Sand (Typ 0,5/2), 0 bis 30 Gew.% Quarzsand (Typ L 55), 18 bis 25 Gew.% Zement (Typ CEM II 52,5), 0,2 bis 1,4 Gew.% Additiv (Typ FK 61), 0,2 bis 0,8 Gew.% Additiv (Typ BWA 22) und 0,3 bis 1,0 Gew.% Farbe (Typ granit) zugeführt werden.

4. Verfahren nach Anspruch 3, **dadurch gekennzeichnet, dass** dem Mischer 54,13 Gew.% Sand (Typ 0/3), 11,4 Gew.% Sand (Typ 0,5/2), 5,7 Gew.% Quarzsand (Typ L 55), 20,89 Gew.% Zement (CEM II 52,5), 0,47 Gew.% Additiv (Typ FK 61), 0,38 Gew.% Additiv (Typ BWA 22) und 0,5 Gew.% Farbe (Typ granit) zugeführt werden.

5. Verfahren nach den Ansprüchen 2 bis **4, dadurch gekennzeichnet, dass** dem Mischer (14) zuerst die Feststoffe und mit dem Einsetzen des Mischvorgangs die flüssigen Komponenten zugeführt werden.

6. Verfahren nach Anspruch 1, **dadurch gekennzeichnet, dass** der Druck der Druckluft mindestens 4 · 10⁵ Pa, vorzugsweise 6 · 10⁵ Pa bis 10 · 10⁵ Pa beträgt.

7. Verfahren nach Anspruch 1, **dadurch gekennzeichnet, dass** die Druckluft für 1 bis 5 Sekunden auf den Kernkasten wirkt.

8. Verfahren nach Anspruch 1, **dadurch gekennzeichnet, dass** vor dem Bereitstellen des Kernkastens (17, 29, 56, 330, 400) auf Kernunterkasten (18, 24, 331, 401) und Kernoberkasten (19, 25, 332, 402) sowie auf den Formträger (233, 333, 403) ein Trennmittel aufgetragen wird.

9. Verfahren nach Anspruch 1, **dadurch gekennzeichnet, dass** der Zubehörstein (26, 33, 295, 334, 404) beim Schneidvorgang nachverdichtet wird.

10. Verfahren nach Anspruch 1, **dadurch gekennzeichnet, dass** der Zubehörstein (26, 33, 295, 334, 404) nach dem Schneidvorgang mit einer äußeren Schicht versehen wird.

11. Verfahren nach Anspruch 10, **dadurch gekennzeichnet, dass** der Zubehörstein (26, 33, 295, 334, 404) mit einer Farbschicht versehen wird.

12. Verfahren nach Anspruch 10 und Anspruch 11, **dadurch gekennzeichnet, dass** der Zubehörstein (26, 33, 295, 334, 404) nach der Beschichtung bei mindestens 40 °C und einer Luftfeuchtigkeit von mindestens 65 % in einer Trockenkammer aushärtet.

13. Verfahren nach Anspruch 12, **dadurch gekennzeichnet, dass** der Zubehörstein (26, 33, 295, 304, 404) für 6 bis 10 Stunden in der Trockenkammer verweilt.

14. Einrichtung für die Herstellung von Zubehörsteinen (26, 33, 295, 334, 404), wobei diese Einrichtung eine Kernschießvorrichtung (16) sowie einen Formträger (233, 333, 403) aufweisenden Kernkasten (17, 29, 56, 330, 400) enthält mit folgenden Merkmalen:
a) es ist ein Mischer (14) zum Herstellen von Frischbeton vorgesehen, wobei dieser Frischbeton wenigstens die Komponenten Wasser und Zement enthält;
b) der Kernkasten (17, 29, 56, 330, 400) weist eine Einschussöffnung auf; **gekennzeichnet durch** folgende Merkmale:
c) am Formträger (233, 333, 403) ist zumindest eine Siebdüse (293, 294, 324, 323, 376, 377, 378) angeordnet;
d) an einem Kernunterkasten (18, 24, 79, 331, 401) des Kernkastens (17, 29, 56, 330, 400) ist zumindest eine Ausfräsung (286, 370) angeordnet;
e) es ist eine Schneidvorrichtung (171, 172) vorgesehen, welche überstehende Teile des Zubehörsteins (26, 33, 295, 334, 404) abschneidet.

## Claims

1. Method for producing accessory tiles (26, 33, 295, 334, 404) by means of a core shooter device (16) and a core box (17, 29, 56, 330, 400) comprising a mould carrier (232, 333, 403), having the following steps:
a) at least two components, of which one component is water and the other component is cement, are placed into a mixer (14) and mixed to form wet concrete;
b) the wet concrete is poured into the core boxes (17, 29, 56, 330, 400) by means of compressed air through an injection opening in said core box (17, 29, 56, 330, 400),
**characterised by** the following steps:
c) the venting of the core box (17, 29, 56, 330, 400) takes place via at least one screen nozzle (293, 294, 324, 323, 376, 377, 378) arranged on the mould carrier (232, 333, 403) and at least one recess (286, 370) arranged on a lower core box (18, 24, 79, 331, 401) of the core box (17, 29, 56, 330, 400);
d) the accessory tile (26, 33, 295, 334, 404) formed in the core box (17, 29, 56, 330, 400) is removed from the core box (17, 29, 56, 330, 400) and supplied to a cutting device (171, 172) where projecting portions of the accessory tile (26, 33, 295, 334, 404) are cut off.

2. Method according to claim 1, **characterised in that** sand, water, cement, pigments and additives are metered and supplied to a mixer (14).

3. Method according to claim 2, **characterised in that** 45 to 75 wt.% sand (type 0/3), 0 to 24 wt.% sand (type 0.5/2), 0 to 30 wt.% quartz sand (type L 55), 18 to 25 wt.% cement (type CEM II 52.5), 0.2 to 1.4 wt.% additive (type FK 61), 0.2 to 0.8 wt.% additive (type BWA 22) and 0.3 to 1.0 wt.% colourant (type granite) are supplied to the mixer.

4. Method according to claim 3, **characterised in that** 54.13 wt.% sand (type 0/3), 11.4 wt.% sand (type 0.5/2), 5.7 wt.% quartz sand (type L 55), 20.89 wt.% cement (type CEM II 52.5), 0.47 wt.% additive (type FK 61), 0.38 wt.% additive (type BWA 22) and 0.5 wt.% colourant (type granite) are supplied to the mixer.

5. Method according to claims 2 to 4, **characterised in that** first the solids and then, at the onset of the mixing process, the liquid components are supplied to the mixer (14).

6. Method according to claim 1, **characterised in that** the pressure of the compressed air is at least 4·10⁵ Pa, preferably 6·10⁵ Pa to 10·10⁵ Pa.

7. Method according to claim 1, **characterised in that** the compressed air acts for 1 to 5 seconds on the core box.

8. Method according to claim 1, **characterised in that**, before providing the core box (17, 29, 56, 330, 400), a parting agent is applied to the lower core box (18, 24, 331, 401) and to the upper core box (19, 25, 332, 402) as well as to the mould carrier (233, 333, 403).

9. Method according to claim 1, **characterised in that** the accessory tile (26, 33, 295, 334, 404) is re-pressed during the cutting process.

10. Method according to claim 1, **characterised in that** the accessory tile (26, 33, 295, 334, 404) is provided with an outer coating after the cutting process.

11. Method according to claim 10, **characterised in that** the accessory tile (26, 33, 295, 334, 404) is provided with a colour coating.

12. Method according to claim 10 and claim 11, **characterised in that**, after the coating, the accessory tile (26, 33, 295, 334, 404) is cured in a drying chamber at a temperature of at least 40 °C and an air humidity of at least 65 %.

13. Method according to claim 12, **characterised in that** the accessory tile (26, 33, 295, 304, 404) dwells for 6 to 10 hours in the drying chamber.

14. Device for producing accessory tiles (26, 33, 295, 334, 404), said device including a core shooter device (16) as well as a core box (17, 29, 56, 330, 400) comprising a mould carrier (233, 333, 403), having the following features:
a) a mixer (14) is provided for producing wet concrete, said wet concrete containing at least the components water and cement;
b) the core box (17, 29, 56, 330, 400) comprises an injection opening; **characterised by** the following features:
c) at least one screen nozzle (293, 294, 324, 323, 376, 377, 378) is arranged on the mould carrier (233, 333, 403);
d) at least one recess (286, 370) is arranged on a lower core box (18, 24, 79, 331, 401) of the core box (17, 29, 56, 330, 400);
e) a cutting device (171, 172) is provided which cuts off projecting portions of the accessory tile (26, 33, 295, 334, 404).

## Revendications

1. Procédé de fabrication de tuiles auxiliaires (26, 33, 295, 334, 404) au moyen d'un dispositif à tirer les noyaux (16) et d'une boîte à noyau (17, 29, 56, 330, 400), qui présente un porte-moule (232, 333, 403) en suivant les étapes suivantes :
a) on place dans un mélangeur (14) au moins deux composants, dont un composant est de l'eau et l'autre composant du ciment, et on mélange le tout à du béton frais ;
b) le béton frais est injecté au moyen d'air comprimé à travers une ouverture d'injection de la boîte à noyau (17, 29, 56, 330, 400) dans ces boîtes à noyaux (17, 29, 56, 330, 400), **caractérisé par** les étapes suivantes :
c) la purge de la boîte à noyau (17, 29, 56, 330, 400) se fait via au moins une buse de filtration (293, 294, 324, 323, 376, 377, 378) aménagée sur le porte-moule (232, 333, 403) et via au moins une fraisure (286, 370) ménagée sur un bâti inférieur (18, 24, 79, 331, 401) de la boîte à noyau (17, 29, 56, 330, 400) ;
d) la tuile auxiliaire (26, 33, 295, 334, 404) formée dans la boîte à noyau (17, 29, 56, 330, 400) est retirée de la boîte à noyau (17, 29, 56, 330, 400) et acheminée à un dispositif de coupe (171, 172) où des parties de la tuile auxiliaire (26, 33, 295, 334, 404) qui dépassent sont rognées.

2. Procédé selon la revendication 1, **caractérisé en ce que** du sable, de l'eau, du ciment, des pigments et des additifs sont dosés et acheminés dans un mélangeur (14).

3. Procédé selon la revendication 2, **caractérisé en ce que** l'on achemine au mélangeur 45 à 75 % en poids de sable (type 0/3), 0 à 24 % en poids de sable (type 0,5/2), 0 à 30 % en poids de sable siliceux (type L 55), 18 à 25 % en poids de ciment (type CEM II 52,5), 0,2 à 1,4 % en poids d'additif (type FK 61), 0,2 à 0,8 % en poids d'additif (type BWA 22) et 0,3 à 1 % de colorant (de type granite).

4. Procédé selon la revendication 3, **caractérisé en ce que** l'on achemine au mélangeur 54,13 % en poids de sable (type 0/3), 11,4 % en poids de sable (type 0,5/2), 5,7 % en poids de sable siliceux (type L 55), 20,89 % en poids de ciment (CEM II 52,5), 0,47 % en poids d'additif (type FK 61), 0,38 % en poids d'additif (type BWA 22) et 0,5 % en poids de colorant (type granite).

5. Procédé selon les revendications 2 à 4, **caractérisé en ce que** l'on achemine au mélangeur (14) tout d'abord les matières solides et, avec le démarrage de l'opération de mélange, les composants liquides.

6. Procédé selon la revendication 1, **caractérisé en ce que** la pression de l'air comprimé atteint au moins 4 x 10⁵ pA, de préférence 6 x 10⁵ pA à 10 x 10⁵ Pa.

7. Procédé selon la revendication 1, **caractérisé en ce que** l'air comprimé agit sur les boîtes à noyaux pendant 1 à 5 secondes.

8. Procédé selon la revendication 1, **caractérisé en ce que**, avant la préparation de la boîte à noyau (17, 29, 56, 330, 400), on applique un agent séparateur sur le bâti inférieur (18, 24, 331, 401) et le bâti supérieur (19, 25, 332, 402) de la boîte à noyau ainsi que sur le porte-moule (233, 333, 403).

9. Procédé selon la revendication 1, **caractérisé en ce que** la tuile auxiliaire (26, 33, 295, 334, 404) est ré-comprimée lors de l'opération de coupe.

10. Procédé selon la revendication 1, **caractérisé en ce que** la tuile auxiliaire (26, 33, 295, 334, 404) est pourvue d'une couche externe après l'opération de coupe.

11. Procédé selon la revendication 10, **caractérisé en ce que** la tuile auxiliaire (26, 33, 295, 334, 404) est pourvue d'une couche de colorant.

12. Procédé selon la revendication 10 et la revendication 11, **caractérisé en ce que** la tuile auxiliaire (26, 33, 295, 334, 404) est durcie après le revêtement à au moins 40 °C et une humidité de l'air d'au moins 65 % dans une chambre de séchage.

13. Procédé selon la revendication 12, **caractérisé en ce que** la tuile auxiliaire (26, 33, 295, 304, 404) reste 6 à 10 heures dans la chambre de séchage.

14. Dispositif de fabrication de tuiles auxiliaires (26, 33, 295, 334, 404), dans lequel ce dispositif contient un dispositif à tirer les noyaux (16) ainsi que des boîtes à noyaux (17, 29, 56, 330, 400) présentant un porte-moule (233, 333, 403), présentant les caractéristiques suivantes :
a) il est prévu un mélangeur (14) pour la fabrication de béton frais, dans lequel ce béton frais contient au moins les composants eau et ciment ;
b) la boîte à noyau (17, 29, 56, 330, 400) présente une ouverture d'injection ; **caractérisé par** les caractéristiques suivantes :
c) au moins une buse de filtration (293, 294, 324, 323, 376, 377, 378) est aménagée sur le porte-moule (233, 333, 403) ;
d) au moins une fraisure (286, 370) est ménagée sur un bâti inférieur (18, 24, 79, 331, 401) de la boîte à noyau (17, 29, 56, 330, 400) ; et
e) il est prévu un dispositif de coupe (171, 172), qui rogne les parties dépassant de la tuile auxiliaire (26, 33, 295, 334, 404).
